(19) Europäisches Patentamt
European Patent Office
Office européen des brevets

(11) EP 2 286 916 B1

(12) EUROPÄISCHE PATENTSCHRIFT

(45) Veröffentlichungstag und Bekanntmachung des Hinweises auf die Patenterteilung:
**27.05.2015 Patentblatt 2015/22**

(51) Int Cl.:
***B01J 35/00*** (2006.01) ***B01J 37/00*** (2006.01)
***G01N 21/64*** (2006.01) ***G01N 21/84*** (2006.01)

(21) Anmeldenummer: **10172071.2**

(22) Anmeldetag: **05.08.2010**

# (54) Verfahren und Verwendung lumineszenter Verbindungen zur Messung einer photokatalytischen Oberflächenaktivität

Method and use of luminescent compounds for measuring photocatalytic surface activity

Procédé et utilisation de liaisons luminescentes pour la mesure d’une activité de surface photocatalytique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **13.08.2009 DE 102009037031**
**29.09.2009 DE 102009043378**

(43) Veröffentlichungstag der Anmeldung:
**23.02.2011 Patentblatt 2011/08**

(73) Patentinhaber:
- **Technische Universität Braunschweig 38106 Braunschweig (DE)**
- **Fraunhofer Gesellschaft zur Förderung der angewandten Forschung e.V. 80686 München (DE)**

(72) Erfinder:
- **Johannes, Hans-Hermann Braunschweig 38124 (DE)**
- **Kowalsky, Wolfgang Braunschweig 38116 (DE)**
- **Böttger, Matthias Braunschweig 38102 (DE)**
- **Wiegmann, Björn Braunschweig 38102 (DE)**
- **Zöllner, Mike 01217 Dresden (DE)**
- **Neumann, Frank 38108 Braunschweig (DE)**
- **Graumann, Tobias 38108 Braunschweig (DE)**

(74) Vertreter: **Taruttis, Stefan Georg**
**TARUTTIS Patentanwaltskanzlei**
**Aegidientorplatz 2b**
**30159 Hannover (DE)**

(56) Entgegenhaltungen:
**WO-A1-2005/119220 WO-A1-2008/046588**
**DE-A1-102005 042 897 JP-A- 2007 298 328**

- **GUAN ET AL: "Rapid probing of photocatalytic activity on titania-based self-cleaning materials using 7-hydroxycoumarin fluorescent probe" ANALYTICA CHIMICA ACTA, ELSEVIER, AMSTERDAM, NL, Bd. 608, Nr. 1, 7. Januar 2008 (2008-01-07), Seiten 73-78, XP022425324 ISSN: 0003-2670**
- **MCNAMARA W R ET AL: "Acetylacetonate anchors for robust functionalization of TiO2 nanoparticles with Mn(II)-terpyridine complexes" JOURNAL OF THE AMERICAN CHEMICAL SOCIETY 20081029 AMERICAN CHEMICAL SOCIETY US, Bd. 130, Nr. 43, 29. Oktober 2008 (2008-10-29), Seiten 14329-14338, XP002605329 DOI: DOI:10.1021/JA805498W**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 286 916 B1

Printed by Jouve, 75001 PARIS (FR)

## Beschreibung

Die Erfindung betrifft ein Verfahren und die Verwendung organischer Verbindungen, die einen Komplex mit einem Seltenerdmetall bilden, der luminesziert, zur Bestimmung der Aktivität einer unter Bestrahlung mit einer Anregungswellenlänge photokatalytisch aktiven Verbindung, auch Photokatalysator genannt, mittels der Detektion der Emission der lumineszenten Verbindung, bzw. mittels der Bestimmung des zeitlichen Verlaufs dieser gemessenen Emission. Insbesondere betrifft die Erfindung die Verwendung organischer Verbindungen, die einen Komplex mit einem Seltenerdmetall bilden, in dem Verfahren, da diese Verbindungen im Wesentlichen nur abhängig von der Katalyseaktivität degradiert werden und ihre Emission im Wesentlichen unabhängig von Licht eingestrahlter Wellenlängen messbar ist, die zur Anregung des Photokatalysators verwendet werden. Denn die lumineszenten Verbindungen emittieren bei deutlich größeren Wellenlängen, als z.B. zur Anregung von $TiO_2$-Photokatalysatore eingestrahlt werden. Die erfindungsgemäß eingesetzten lumineszenten Verbindungen, auch Indikatorverbindungen genannt, werden in Kontakt mit einem Photokatalysator bei dessen Bestrahlung bei dessen Katalysewellenlänge im Wesentlichen nur abhängig von der Aktivität des Photokatalysators degradiert, während sie selbst, z.B. in Abwesenheit eines Photokatalysators, bei Bestrahlung im Wesentlichen photostabil sind. Dadurch, dass die erfindungsgemäß verwendete Indikatorverbindung in Anwesenheit eines Photokatalysators degradierbar ist, wird die Gesamtemission der degradierbaren Indikatorverbindung bei Bestrahlung des Photokatalysators bei dessen Katalysewellenlänge reduziert. Die Indikatorverbindung ist durch Bestrahlung in einem Wellenlängenbereich, der eine Anregungswellenlänge umfasst, die auch als Induktionswellenlänge bezeichnet wird, zur Emission induzierbar. Die Induktionswellenlänge kann, abhängig von der chemischen Struktur der lumineszenten Verbindung, im Bereich der Katalysewellenlänge für den Photokatalysator liegen, oder signifikant kürzer oder länger sein als die für die Aktivierung des Photokatalysators spezifische Katalysewellenlänge. Entsprechend betrifft die Erfindung neben dem Analyseverfahren auch die Verwendung der Indikatorverbindung zur Verwendung in dem Analyseverfahren zur Bestimmung der Aktivität eines Photokatalysators unter Bestrahlung, sowie eine Messvorrichtung zur Durchführung des Analyseverfahrens, die bevorzugt einen Vorratsbehälter für die erfindungsgemäß verwendete Indikatorverbindung und/oder zusätzlich zur Strahlungsquelle für die Katalysewellenlänge eine Strahlungsquelle für Induktionswellenlänge aufweist.

## Stand der Technik

Die DE 10 2004 027118 beschreibt die Messung der Aktivität eines Photokatalysators unter UV-Bestrahlung im Vergleich zu einer Vergleichssubstanz durch Messung der Reduktion der Fluoreszenz eines auf den Photokatalysator bzw. die Vergleichssubstanz aufgetragenen Fluoreszenzfarbstoffs. Bevorzugt wird Lumogen F, erhältlich von der BASF AG, als Fluoreszenzfarbstoff eingesetzt.

Die DE 10 2006 049009 beschreibt ein Verfahren zur Messung der Aktivität photokatalytischer Verbindungen unter Bestrahlung durch Bestimmung des zeitlichen Verlaufs gemessenen Streulichts, das unter Bestrahlung einer photokatalytischen Verbindung nach Beschichtung mit organischen Fettsäuren bestimmt wird.

Die DE 10 2005 003878 beschreibt eine Messsonde mit einem auf eine photokatalytische Aktivität einer bestrahlten Schicht reaktiven Indikator, der während der Messung in einem Abstand zur katalytisch aktiven Schicht angeordnet wird. Als Indikator werden Methylenblau, Aliphate oder fluoreszierende Perylenderivate genannt.

Die WO 2004/080595 beschreibt die Verwendung eines redox-empfindlichen Materials zur Messung der Aktivität eines photokatalytisch aktiven Materials in Anwesenheit eines Elektronendonors oder -akzeptors.

Guan et al., Analytica Chimica Acta 608, (2008) 73-78 beschreiben eine Methode zur Bestimmung der photokatalytischen Aktivität selbstreinigender Materialien. Diese werden nach Kontaktieren mit Cumarin-Lösung mittels Fluoreszenzspektrometrie auf die Bildung von fluoreszierendem 7-Hydroxycumarin untersucht.

JP 2007 298328 beschreibt gemäß der englischsprachigen Zusammenfassung eine Methode zur Bestimmung photokatalytischer Aktivität, die auf der photokatalytisch induzierten Entfärbung von Methylenblau basiert.

WO 2005/119220 A1 beschreibt die Beschichtung von Photokatalysatoren mit organischen Farbstoffen und die Bestimmung der Fluoreszenzintensität nach Bestrahlung. Die Abnahme der Fluoreszenz dieser Proben im Vergleich zu beschichteten, photokatalytisch inaktiven Referenzproben wird als Maß für die photokatalytische Aktivität der Proben herangezogen.

De Silva et al. beschreiben in Thin Solid Films 957-962 (2008) Europiumkomplexe zur Verwendung als elektrolumineszente Materialien in OLEDs. Das Emissionsverhalten einer Beispielverbindung wird für deren Lösung in Methylenchlorid gezeigt, bei der Europium mit 2,4,6-Tri-(2-pyridyl)-1,3,5-triazin und drei Sättigungsliganden aus Theonyltrifluoraceton komplexiert war. Die elektrooptischen Eigenschaften wurden für eine Beispielverbindung in einer üblichen OLED gemessen, wobei die Europium-Verbindung als Dotierung in einer Matrix aus Ladungsübertragern enthalten war. Ein Hinweis auf die chemische Stabilität der Europium-Verbindungen wird nicht gegeben; ebenso werden keine Angaben zu den Lumineszenz-Eigenschaften der Verbindung als Festkörper, bzw. ohne Matrixmaterialien gemacht.

Kang et al. (Bull. Korean Chem. Soc. 75-80 (1997) beschreiben die Europium-Komplexverbindung mit 2,2':6',2"-terpyridin mit 3 Hexafluoracetylaceton-Liganden als luft- und feuchtigkeitsstabilen CVD-Vorläufer für Europium, der jedoch den Nachteil hat, nicht als vollständiges Molekül zu sublimieren.

## Aufgabe der Erfindung

Der Erfindung stellt sich die Aufgabe, ein alternatives Verfahren zur Bestimmung der photokatalytischen Aktivität von Stoffen, insbesondere von Beschichtungen bereitzustellen, und insbesondere die Verwendung eines alternativen, bei Bestrahlung mit einer Induktionswellenlänge emittierenden Farbstoffs in einem solchen Verfahren.

## Allgemeine Beschreibung der Erfindung

Die Erfindung löst die vorgenannte Aufgabe mit den Merkmalen der Ansprüche, insbesondere mit einem Verfahren zur Bestimmung der Aktivität einer photokatalytisch aktiven Verbindung, insbesondere eines Photokatalysators, der auf einem Träger aufgeschichtet ist, durch Detektion der Emission einer insgesamt ladungsneutralen Indikatorverbindung gemäß Formel I

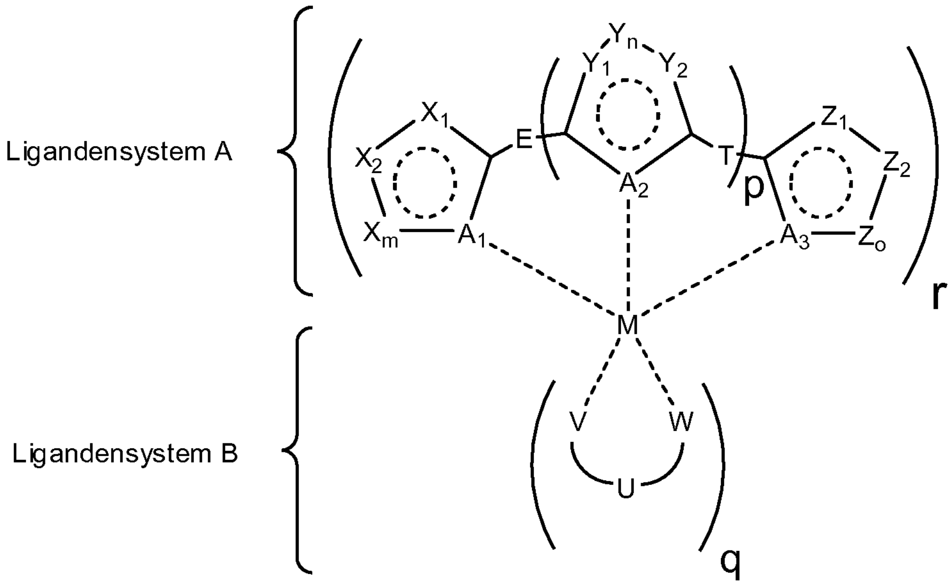


(I)

oder von deren Derivaten gemäß Formel II

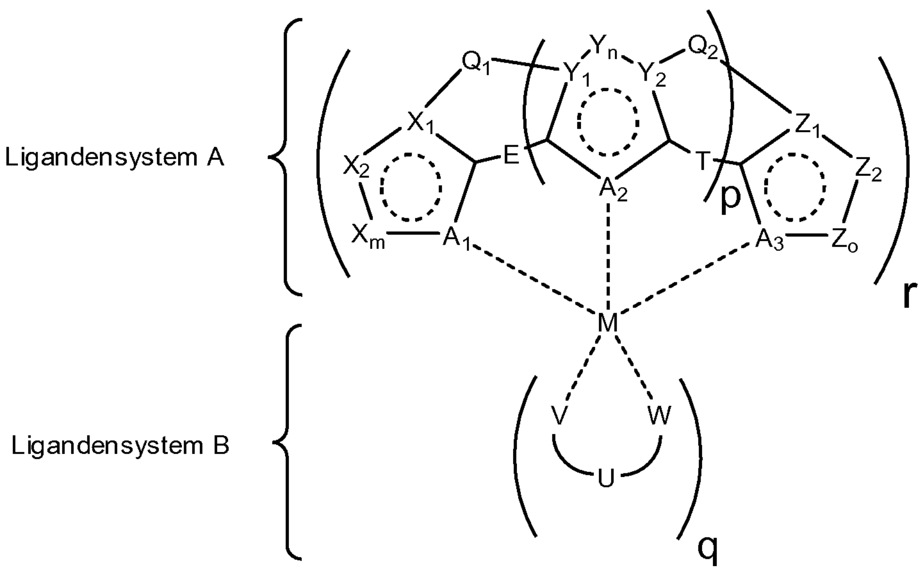


(II),

wobei jeweils M ein Seltenerdmetall ist, nämlich Eu oder Tb, vorzugsweise in der Oxidationsstufe II, besonders bevorzugt Oxidationsstufe III, wobei die Ligandensysteme A und B insgesamt eine gegenüber M kompensierende Ladung aufweisen.

Der Metallkomplex enthält r (r = 1, 2 oder 3) Ligandensysteme A neutraler oder anionischer Natur, die zwei oder mehrere (p = 0,1,2,3) durch E und T verknüpfte aromatische Gruppen variabler Ringgröße (m, n bzw. o = 1, 2, 3 oder 4) aufweisen.

E und T sind unabhängig voneinander eine Bindung oder 1 bis 3 Atome, insbesondere ausgewählt aus der Gruppe, die N, C, O und S enthält. E und T können anstelle von H mit C1-bis C12-Kohlenwasserstoffgruppen substituiert sein, die optional Heteroatome enthalten.

In den aromatischen Gruppen können X1, X2, Xm, Y1, Y2, Yn, Z1, Z2, Zo aus der Gruppe ausgewählt sein, die C, O, S, N, Se umfasst oder daraus besteht, und
die neutralen oder negativ geladenen Atome A1, A2, A3 können aus der Gruppe ausgewählt sein, die C, O, S, N, Se umfasst oder daraus besteht und sind vorzugsweise durch eine kovalente oder koordinative Bindung an das Seltenerdmetall M gebunden.

Die aromatischen Gruppen können jeweils unabhängig an X1, X2, Xm, Y1, Y2, Yn, Z1, Z2, Zo substituiert sein.

In Formel I kann das Ligandensystem A durch Einfachbindungen aneinander gebundene elektronisch getrennte, jeweils unabhängig konjugierte oder aromatische Gruppen aufweisen, oder ein verbrücktes $\pi$-System bilden, insbesondere ein konjugiertes, anelliertes oder aromatisches Ligandensystem A sein.

In Formel II sind Q1 und Q2 unabhängig voneinander eine chemische Bindung, insbesondere eine Einfach- oder Doppelbindung, oder ein Atom oder eine Gruppe, vorzugsweise aus der Gruppe ausgewählt, die C, O, S, N, Se, und gesättigte, ungesättigte, anellierte und aromatische 5- oder 6-Ringgruppen, die optional Heteroatome enthalten und optional substituiert sind, umfasst oder daraus besteht. Q1 und Q2 sind vorzugsweise je eine C=C-Gruppe, so dass das Ligandensystem A ein verbrücktes $\pi$-System darstellt, das M komplexiert. Das verbrückte $\pi$-System kann ein konjugiertes, anelliertes oder aromatisches Ligandensystem A sein.

Eine Verknüpfung durch Q1 und Q2 entsprechend Formel II lässt annellierte oder kondensierte aromatische Gruppen im Ligandensystem A entstehen. Wenn p = 0 ist, dann verbindet E die beiden randständigen aromatischen Gruppen, und in Verbindung II entfällt überdies Q2, so dass X1 durch Q1 mit Z1 verbunden ist.

Weiterhin weisen die Verbindungen ein Ligandensystem B mit q = 0, 1, 2, 3, 4 oder 5 monoanionischen Liganden auf, die über die Atome V bzw. W, voneinander unabhängig aus der Gruppe ausgewählt, die C, O, S, N und Se umfasst oder daraus besteht, an M gebunden sind, wobei U eine optional substituierte Brücke zwischen V und W darstellt, die bevorzugt auch mit weiteren Resten substituiert sein kann. Die Reste können hierbei ausgewählt sein unter C1- bis C6-Alkyl- und Heteroalkylgruppen, Phenyl-, Thienyl- und weiteren (hetero)aromatischen Gruppen. Vorzugsweise weist U eine Gruppe aus 1 bis 5 Atomen auf oder besteht aus einer Gruppe von 1 bis 5 Atomen, die zwischen V und W angeordnet sind und/oder V und W miteinander verbinden, vorzugsweise 1 bis 3 C-Atome und optional 1 bis 2 Heteroatome, z.B. eine C1- bis C3- Gruppe, wahlweise mit 1 bis 2 zusätzlichen Heteroatomen, z.B. eine (hetero)aromatische und (Hetero)alkylen-Gruppe, wobei die Gruppe gesättigt oder teilweise ungesättigt sein kann, und wobei das Heteroatom insbesondere unter N, S, O und Se ausgewählt ist. U ist insbesondere ausgewählt aus der Gruppe, die eine -C=C-N- -Gruppe, eine Phenylen-, Thienylen-, Methylen-, Trifluormethylen-, Ethylen-, Ethenylen-, Propylen-, Propenylen-, Ethyliden- und Ethinylen-Gruppe umfasst oder daraus besteht. Vorzugsweise sind V und W, gleich oder verschieden neutrale oder negativ geladene Atome aus der Gruppe, die C, O, S, N und Se umfasst oder daraus besteht, insbesondere O, S und/oder N. Besonders bevorzugt bildet U mit W und V ein Ligandensystem B aus der Gruppe, die weiter unten gezeigt ist.

Die Anzahl q der monoanionischen Liganden des Ligandensystems B entspricht vorzugsweise der Ladung des Metallatoms M abzüglich der Anzahl der negativ geladenen Einheiten A1, A2, A3 multipliziert mit r gemäß der folgenden Formel:

$$q = Ladung\ (M) - \ r \times (Ladung\ |(A1 + A2 + A3)|)$$

Für die Zwecke der Erfindung bedeutet die Vorsilbe "(Hetero)" die optionale Anwesenheit von Heteroatomen, z.B. von O, S, N, Se, anstelle eines oder mehrerer Kohlenstoffatome in der Gruppe, z.B. der Ausdruck (Hetero)alkyl entsprechend Heteroalkyl und/oder Alkyl, (Hetero)aryl entsprechend Heteroaryl und/oder Aryl, (Hetero)aromat entsprechend Heteroaromat und/oder Aromat.

Die erfindungsgemäß in dem Verfahren verwendeten Indikatorverbindungen selbst, d.h. ohne Kontakt mit einem Photokatalysator, unterliegen bei Bestrahlung nicht der Photolyse, sondern sind im Wesentlichen stabil. Entsprechend haben sie den Vorteil, im Wesentlichen nicht selbst durch Photolyse bei Bestrahlung degradiert zu werden, sondern nur in Abhängigkeit von der Aktivität des Photokatalysators degradiert zu werden, so dass eine Reduktion ihrer Emission die Aktivität des Photokatalysators anzeigt. Vorteilhafterweise ist der Verlauf der Degradationsreaktion erfindungsgemäßer Verbindungen in Anwesenheit eines Photokatalysators zumindest abschnittsweise linear.

Des Weiteren haben die erfindungsgemäß verwendeten Indikatorverbindungen den Vorteil, dass ihre Degradationsprodukte nicht im Bereich der Katalysewellenlänge des Photokatalysators absorbieren, so dass die Degradation der Indikatorverbindung nicht zur Abschwächung der Bestrahlung des Photokatalysators bei dessen Katalysewellenlänge führt. Degradationsprodukte erfindungsgemäßer Indikatorverbindungen absorbieren im Wesentlichen auch nicht die Induktionswellenlänge der Indikatorverbindung und daher beeinflussen die Degradationsprodukte nicht die Induktion der Emission.

Ein besonderer Vorteil der erfindungsgemäßen Indikatorverbindungen liegt darin, dass diese unter dem Einfluss von Hydroxylradikalen, beispielsweise erzeugt von einem Photokatalysator wie Titandioxid in Anwesenheit von Wassermolekülen, die z.B. nur aus Luftfeuchtigkeit an den Photokatalysator angelagert sind, unter Bestrahlung mit Katalysewellenlänge mit einer etwa konstanten Degradationsrate abgebaut werden, d.h. einem etwa linearen Abbau unterliegen, was die Auswertung der detektierten Messwerte erleichtert.

Es ist bevorzugt, dass der Photokatalysator unter Bestrahlung Hydroxylradikale erzeugt, z.B. durch Hydrolyse oberflächlich am Photokatalysator adhärierenden Wassers, insbesondere ohne Kontakt mit einer Flüssigphase. Entsprechend kann das Verfahren vorsehen, dass Photokatalysator, der mit Indikatorverbindung kontaktiert ist, in Abwesenheit einer Flüssigphase oder in Abwesenheit einer solubilisierenden Phase vorliegt.

In einer ersten Ausführungsform liegt die Induktionswellenlänge im Bereich der Katalysewellenlänge, bzw. die Induktionswellenlänge wird von der zur Aktivierung des Photokatalysators eingestrahlten Strahlung umfasst. In dieser Ausführungsform induziert die Bestrahlung des Photokatalysators mit einer Strahlung im Bereich einer die Katalyse aktivierenden Wellenlänge auch die Emission der Indikatorverbindung. In dieser Ausführungsform ist die Induktionswellenlänge von der Katalysewellenlänge umfasst bzw. in der Katalysewellenlänge enthalten, so dass die Erzeugung und Einstrahlung eines Wellenlängenbereichs auf den mit Indikatorverbindung kontaktierten Photokatalysator ausreicht und die Emission bei größerer Wellenlänge detektiert wird.

In einer zweiten Ausführungsform verwendete Indikatorverbindungen der Erfindung weisen eine andere Absorptions- bzw. Induktionswellenlänge auf als die Katalysewellenlänge des Photokatalysators, so dass in Kontakt mit einem Photokatalysator, beispielsweise nach Auftrag auf eine Schicht mit einem Gehalt an Photokatalysator, Strahlung einer Wellenlänge, die für die photokatalytische Aktivität des Photokatalysators erforderlich ist, insbesondere für Titandioxid, nicht durch die lumineszente Indikatorverbindung abgeschwächt wird. In dieser Ausführungsform wird zusätzlich zur Bestrahlung des mit Indikatorverbindung kontaktierten Photokatalysators mit Katalysewellenlänge eine Induktionswellenlänge eingestrahlt, die kürzer oder länger als die Katalysewellenlänge ist.

Die von der Indikatorverbindung absorbierte Induktionswellenlänge hängt im Wesentlichen von der Struktur der organischen Ligandensystemen A und/oder B ab. Der Fachmann kann daher durch Messung des Absorptionsspektrums von Indikatorverbindungen die Induktionswellenlänge als Wellenlänge identifizieren, bei der eine signifikante Absorption gemessen wird. Bei Induktionswellenlängen innerhalb des Wellenlängenbereichs, der zur Aktivierung des Photokatalysators eingestrahlt wird, kann gemäß der ersten Ausführungsform ein Wellenlängenbereich verwendet werden, der sowohl die Katalysewellenlänge als auch die Induktionswellenlänge umfasst. Für Photokatalysatoren mit einem Gehalt an Titandioxid sind dies z.B. Wellenlängenbereich von 350 bis 450 nm, insbesondere 360 bis 410 nm, oder ein Wellenlängenbereich bei 350, 365, 405, 410 und/oder 450 nm, bevorzugt um +/- 5 bis 10nm dieser Wellenlängen.

Bei Absorption der Indikatorverbindung bzw. bei Induktionswellenlängen kürzer oder länger als der Katalysewellenlängenbereich wird gemäß der zweiten Ausführungsform zusätzlich zur Katalysewellenlänge eine zweite Wellenlänge zur Induktion der Indikatorverbindung eingestrahlt. Bei Induktionswellenlängen kürzer als die Katalysewellenlänge ist bevorzugt, dass die Strahlung bei Induktionswellenlänge gepulst eingestrahlt wird, z.B. mittels eines gepulsten Lasers oder mittels eines Ultrakurzpulslasers, bevorzugt mit einer Pulsdauer kleiner als die Dauer der Lumineszenz, die im Bereich von 1 ms liegen kann. Bevorzugt liegt die Pulsdauer des Lasers im Bereich von 1 fs bis 200 $\mu$s, bevorzugt 10 fs bis 100 $\mu$s oder bis 50 $\mu$s oder bis 1 $\mu$s. Bei einer Induktionswellenlänge, die kürzer als die Katalysewellenlänge ist, hat die gepulste Einstrahlung der Induktionswellenlänge nur eine geringe Aktivierung der katalytischen Aktivität zur Folge und erhöht dadurch die Genauigkeit des Verfahrens, z.B. im Vergleich mit Verfahren mit kontinuierlicher Einstrahlung der Induktionswellenlänge. Entsprechend ist für die Durchführung des Verfahrens in der zweiten Ausführungsform eine Vorrichtung bevorzugt, die eine zweite Strahlungsquelle aufweist, die Strahlung von Induktionswellenlänge erzeugt, und die vorzugsweise bei Induktionswellenlänge kürzer als die Katalysewellenlänge gepulste Strahlung von Induktionswellenlänge erzeugt.

Überdies vorteilhaft ist der große Stokes-Abstand bei erfindungsgemäßen Indikatorverbindungen, denn dieser große Abstand zwischen der absorbierten Induktionswellenlänge und der emittierten Wellenlänge erlaubt in den Ausführungsformen der Erfindung eine einfache und präzise Messung der Emission, ohne störende Einflusse durch Reflektion eingestrahlter Wellenlängen, eingeschlossen die für den Photokatalysator spezifische Katalysewellenlänge. Bei Indikatorverbindungen, die Eu enthalten, liegt die für die Detektion geeignete Emission z.B. im Bereich von 610-620 nm, bei Indikatorverbindungen, die Tb enthalten z.B. im Bereich von 470-480, bevorzugt im Bereich von 540-560 nm, 570-600 nm und/oder 610-630 nm.

Erfindungsgemäße Verbindungen zeigen auch ohne Lösungs- bzw. Solubilisierungsmittel, beispielsweise ohne in OLEDs verwendete Matrixverbindungen, d.h. als Festkörper ohne zusätzliche Flüssig- oder Matrixverbindung, in Kontakt mit einer festen photokatalytisch aktiven Substanz eine hohe Festkörperemission. Diese hohe Festkörperemission wird gegenwärtig auf die molekulare Kugelform erfindungsgemäßer Indikatorverbindungen zurückgeführt, da diese nur einen geringen Kontakt zu einem Festkörper haben, beispielsweise zu einem als Schicht oder in Partikelform vorliegenden Photokatalysator. Dieser Effekt tritt auch bei Kontaktierung von in einer Flüssigphase suspendiertem Photokatalysator, z.B. in wässrigem und/oder organischem Lösungsmittel auf. Entsprechend kann die Indikatorverbindung in dem erfindungsgemäßen Verfahren bzw. zur erfindungsgemäßen Verwendung aus einer Verbindung nach Formel I oder II oder Mischungen dieser bestehen. Im Verfahren oder in der Verwendung der Erfindung kann daher der Photokatalysator und/oder die Indikatorverbindung ohne zusätzliche Flüssigphase vorliegen oder in wässrigem und/oder organischem Lösungsmittel suspendiert sein und jeweils mit Indikatorverbindung kontaktiert werden. Erfindungsgemäß bevorzugt besteht daher die Indikatorverbindung aus einer Verbindung I und/oder II ohne Matrixverbindung und/oder ohne Flüssigphase.

Im Unterschied zu erfindungsgemäßen Indikatorverbindungen zeigt eine Vielzahl von herkömmlichen Lumineszenz-Farbstoffen, insbesondere Lumogen, als Festkörper oder angelagert an einen Festkörper- Photokatalysator häufig das Quenchen, sodass ihre Emission ohne Solubilisierungsmittel, beispielsweise bei Lumogen als Feststoff auf einem $TiO_2$-Photokatalysator, drastisch reduziert ist. Dies wird gegenwärtig auf die Aggregatbildung von herkömmlichen Lumineszenz-Farbstoffen zurückgeführt.

Im erfindungsgemäßen Verfahren, bzw. in der erfindungsgemäßen Verwendung bevorzugte Indikatorverbindungen sind Seltenerdmetall-Komplexe gemäß Formel I oder II mit einem 6-bis 10-fach von Liganden koordinierten Seltenerdmetallion, nämlich Europium oder Terbium, jeweils besonders bevorzugt in der Oxidationsstufe III als $Europium^{3+}$ oder $Terbium^{3+}$.

Das Verfahren zur Bestimmung der Aktivität eines Photokatalysators, insbesondere einer Photokatalysator-Beschichtung auf einem Träger, wobei der Photokatalysator ohne Flüssigphase oder in Suspension vorliegt und vorzugsweise ein Feststoff ist, weist die Schritte auf:

Bereitstellen eines Photokatalysators,
Kontaktieren des Photokatalysators mit einer Indikatorverbindung gemäß Formel I und/oder Formel II,
Bestrahlen des Photokatalysators, der mit der Indikatorverbindung gemäß Formel I und/oder Formel II kontaktiert ist, mit Strahlung einer für die photokatalytische Aktivität geeigneten Katalysewellenlänge,
Bestrahlen des Photokatalysators, der mit der Indikatorverbindung gemäß Formel I und/oder Formel II kontaktiert ist, mit Strahlung einer Induktionswellenlänge, die für die Indikatorverbindung spezifisch ist, und
Detektieren der von der Indikatorverbindung emittierten Strahlung zu zumindest einem Zeitpunkt, vorzugsweise zu zwei oder mehr Zeitpunkten der Bestrahlung des Photokatalysators bei dessen Katalysewellenlänge.

In der ersten Ausführungsform ist die Induktionswellenlänge in der Katalysewellenlänge enthalten, so dass während des Bestrahlens des Photokatalysators die Emission detektiert wird. Dabei kann der Schritt des Bestrahlens des Photokatalysators mit der Induktionswellenlänge, der mit Indikatorverbindung kontaktiert ist, in dem Schritt des Bestrahlens mit Strahlung bei Katalysewellenlänge enthalten sein, und entsprechend als separater Schritt entfallen, so dass die Detektion der Emission während des Bestrahlens mit Strahlung bei Katalysewellenlänge erfolgt.

In der zweiten Ausführungsform ist die Induktionswellenlänge kürzer oder länger als die Katalysewellenlänge und die Bestrahlung mit Induktionswellenlänge und die Detektion können gleichzeitig mit der oder zeitlich versetzt zu der Bestrahlung mit Katalysewellenlänge erfolgen. Bevorzugt ist die Strahlung der Induktionswellenlänge, insbesondere bei kürzeren Wellenlängen als die Katalysewellenlänge, gepulst, z.B. zu Pulsen mit einer Pulsdauer von 1 fs bis 200 $\mu$s.

Das Kontaktieren des Photokatalysators mit Indikatorverbindung kann z.B. durch Aufdampfen im Vakuum (z.B. mittels CVD) oder durch Auftrag einer Mischung der Indikatorverbindung mit einer Flüssigphase (z.B. mittels Sprühen, Rakeln, Auftropfen) z.B. in wässrigem oder organischem Lösungsmittel erfolgen, wahlweise mit anschließendem Entfernen der Flüssigphase.

Die Bestrahlung bei Katalysewellenlänge und gleicher oder abweichender längerer oder kürzerer Induktionswellenlänge kann auf Photokatalysator in Suspension oder in Abwesenheit von Matrix- und/oder Flüssigphase erfolgen.

Die Messung der Emissionen der Indikatorverbindung nach Formel I oder II zu zumindest zwei Zeitpunkten von unterschiedlicher Dauer der Bestrahlung des Photokatalysators, vorzugsweise kontinuierlich während der Bestrahlung des Photokatalysators bei dessen Katalysewellenlänge, erlaubt eine genauere Bestimmung der photokatalytischen Aktivität des Photokatalysators, als z.B. nur 1 Messung der Emission der Indikatorverbindung nach der Bestrahlung des Photokatalysators bei dessen Katalysewellenlänge. Alternativ oder zusätzlich kann eine Vergleichsmessung ohne Photokatalysator erfolgen und die daraus bestimmte Degradationsrate der Indikatorverbindung kann von der Degradationsrate abgezogen werden, die in Anwesenheit des Photokatalysators bestimmt wird. Bei der Vergleichsmessung wird ein photokatalytisch nicht aktiver Träger, z.B. Quarzglas, der ebenfalls mit der Indikatorverbindung kontaktiert ist, gleichermaßen mit Strahlung der Katalysewellenlänge und mit Strahlung der Induktionswellenlänge bestrahlt, und die Emission gleichermaßen gemessen.

Besonders bevorzugt erfasst das erfindungsgemäße Verfahren die Bestimmung der Emission der Indikatorverbindung zu zwei oder mehr Zeitpunkten, insbesondere kontinuierlich während der Dauer der Bestrahlung des Photokatalysators mit Strahlung bei dessen Katalysewellenlänge, in der zweiten Ausführungsform bei Bestrahlung mit Induktionswellenlänge während der Detektion, z.B. nach und/oder gleichzeitig mit der Einstrahlung der Katalysewellenlänge.

Das erfindungsgemäße Verfahren eignet sich insbesondere zur Bestimmung der photokatalytischen Aktivität von Verbindungen, die mit Strahlung im Wellenlängenbereich von ca. 340 nm bis 410 nm aktiviert werden, wie beispielsweise $TiO_2$, das insbesondere bei 365 nm und 405 nm absorbiert und angeregt wird. Denn in der ersten Ausführungsform umfasst diese Katalysewellenlänge die Strahlung mit einer zur Induktion der Indikatorverbindung erforderlichen Wellenlänge, so dass während der Photokatalyse die Verringerung der Emission detektiert werden kann. In der zweiten Ausführungsform ist die Induktionswellenlänge außerhalb der Katalysewellenlänge, so dass die Emission der erfindungsgemäß verwendeten Indikatorverbindungen durch Einstrahlung einer Strahlung im Bereich von kleiner 365 nm, bevorzugt in gepulster Strahlung induziert wird, während die Emission bei Wellenlängen größer 410 nm detektiert werden kann, insbesondere die Emission einer Wellenlänge von 470-480 nm, 540-560 nm, 570-600 nm und/oder 610-630 nm selektiv detektiert wird. Dies ist insbesondere vorteilhaft, da z.B. die für den Photokatalysator $TiO_2$ geeignete Katalysewellenlänge im Bereich von 340-410 nm liegt, während die Emission der Indikatorverbindung nach Formel I oder II selektiv in einem Bereich größerer Wellenlängen liegt, und daher deren selektive Detektion nicht von reflektierter oder gestreuter Einstrahlung gestört wird.

In der zweiten Ausführungsform absorbieren die erfindungsgemäß verwendeten Indikatorverbindungen nach Formel I und II im Wesentlichen nur in geringem oder nicht signifikantem Ausmaß Strahlung im Bereich von 340-410 nm, sodass dabei auch eine Beeinflussung der Aktivierung der photokatalytischen Aktivität beispielsweise einer Beschichtung aus $TiO_2$ nicht durch die Anwesenheit einer Indikatorverbindung gemäß Formel I oder II beeinträchtigt wird.

Insgesamt ermöglicht das erfindungsgemäße Verfahren, bzw. die erfindungsgemäße Verwendung der Indikatorverbindungen gemäß Formel I und II eine quantitative Bestimmung der photokatalytischen Aktivität einer photokatalytisch aktiven Verbindung.

Eine zur Durchführung des erfindungsgemäßen Verfahrens verwendbare Vorrichtung weist eine erste Strahlungsquelle zur Erzeugung der Strahlung bei Katalysewellenlänge, insbesondere bevorzugt im Bereich von 365 nm bis 405 nm, auf. Die erste Strahlungsquelle ist auf eine Photokatalysatorprobe gerichtet, welche in einer Aufnahmeeinrichtung der Vorrichtung anordnbar ist. In der ersten Ausführungsform umfasst die Katalysewellenlänge die Induktionswellenlänge, so dass die Vorrichtung nur die erste Strahlungsquelle enthalten muß, die z.B. in 30 bis 90° auf den Photokatalysator gerichtet ist.

Für die zweite Ausführungsform weist die Vorrichtung zur Einstrahlung von Strahlung bei Induktionswellenlänge, mit der die Indikatorverbindung zur Emission angeregt werden kann, zusätzlich zur ersten Strahlungsquelle eine zweite Strahlungsquelle auf, die Strahlung bei Induktionswellenlänge erzeugt, insbesondere bei 280 bis 450 nm oder bis 400 nm, z.b. 280 bis 320 nm. Bevorzugt ist die zweite Strahlungsquelle in einem Winkel von 30-90° zur ersten Strahlungsquelle angeordnet, und/oder in 30 bis 90° auf den Photokatalysator gerichtet, um den Einfluss von gebrochenem und Streulicht, das vom Photokatalysator zurückgeworfen wird, auf den Detektor zu minimieren. Die Vorrichtung weist einen Detektor zur Messung von Emission auf, die nach Einstrahlung von Induktionswellenlänge von der Indikatorverbindung, die auf oder an dem Photokatalysator ist, abgegeben wird.

Generell ist der Detektor vorzugsweise mit einem Filter versehen, der selektiv für Strahlung mit einer Wellenlänge der Emission der verwendeten Indikatorverbindung durchlässig ist, insbesondere für Wellenlängen >450nm, bevorzugt >600nm, z.B. für Wellenlängen von 600 bis 700nm oder bis 650 nm, um reflektierte oder gestreute Katalyse- oder Induktionsstrahlung von der Detektion auszuschließen.

**Genaue Beschreibung**

Die Erfindung wird nun genauer mit Bezug auf die Figuren beschrieben, in denen

- Figur 1 geglättete Messwerte zum photokatalytischen Abbau einer Vergleichsverbindung (Lumogen F Orange (LUMI)) zeigt,
- Figur 2 den schematischen Aufbau eines erfindungsgemäßen Messgeräts zeigt,
- Figuren 3 und 4 das Absorptionsverhalten jeweils einer erfindungsgemäß verwendeten Indikatorverbindung zeigen, die als Feststoff, d.h. ohne Lösungsmittel vorliegen,
- Figuren 5 und 6 das Emissionsverhalten von erfindungsgemäßen Indikatorverbindungen mit Europium bzw. Terbium zeigen und
- Figur 7 den photokatalytischen Abbau einer erfindungsgemäßen Verbindung auf einer inaktiven Oberfläche im

Vergleich zu verschiedenen photokatalytisch aktiven $TiO_2$-beschichteten Oberflächen zeigt.

Erfindungsgemäße Indikatorverbindungen weisen vorzugsweise als Ligandensystem A eine der folgenden Gruppen auf:

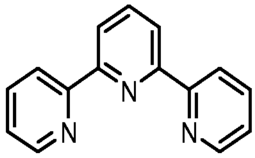
Terpyridin (terpy),

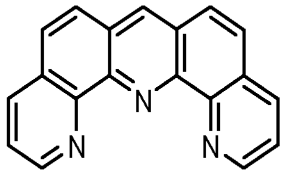
Terpyridin-Derivat,

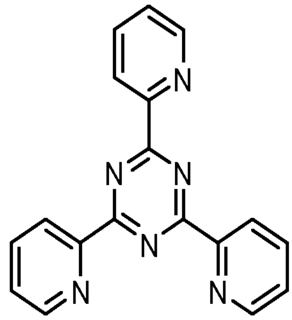
2,4,6-Tris(2-pyridyl)-triazin, (tptz)

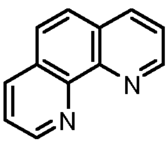
1,10-Phenanthrolin (phen),

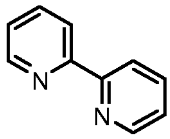
Bipyridin (bipy),

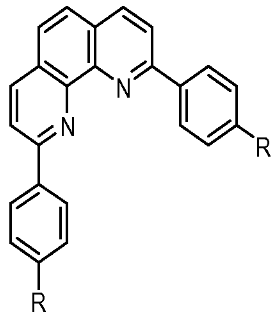
2,9-Di(phenyl)-1,10-phenanthrolin,

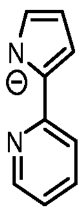
2-(2-Pyridyl)-pyrrolid,

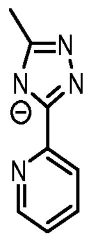
3-Methyl-5-(2-pyridyl)-1,2,4-triazolid

und, in jeder Kombination mit einem dieser, Ligandensystem B eine der folgenden Gruppen:

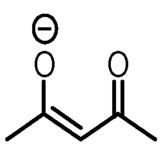
Acetylacetonat (acac),

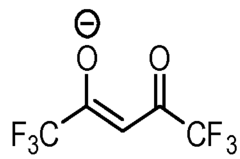
Hexafluoroacetylacetonat (hfac),

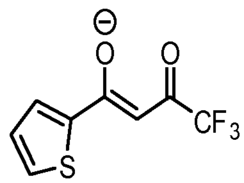
Thienyltrifluormethylacetylacetonat, (ttfa)

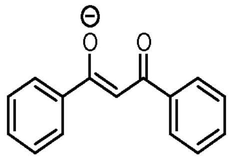

Dibenzoylmethan (DBM),

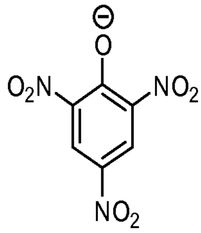

Pikrat,

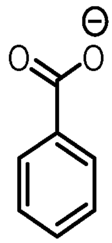

Benzoat,

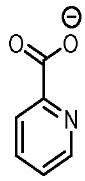

Pikolinat,

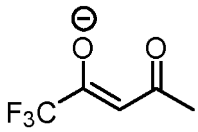

Trifluoroacetylacetonat,

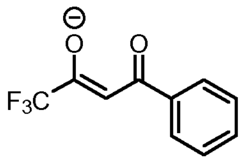

Benzyltrifluormethylacetylacetonat und/oder

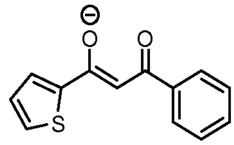

Benzylthienylacetylacetonat.

Besonders bevorzugte Indikatorverbindungen sind

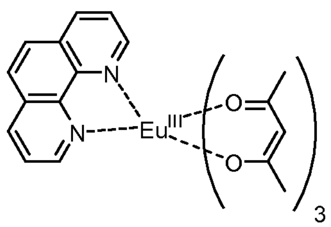

1,10-Phenanthrolin-tris-(acetylacetonat)-europium(III),

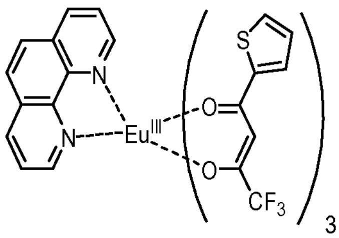

1,10-Phenanthrolin-tris-(thienyltrifluormethylacetylacetonat)-europium(III),

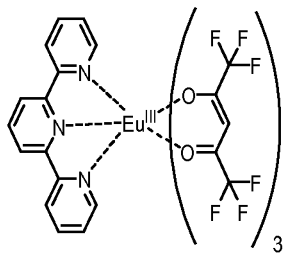

Terpyridin-tris-(hexafluoroacetylacetonat)-europium(III),

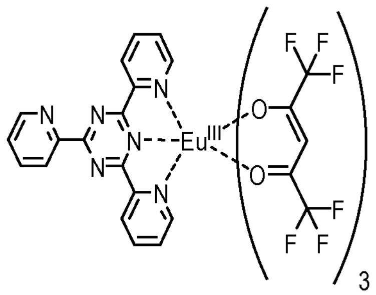

2,4,6-Tris(2-pyridyl)-triazin-tris-(hexafluoroacetylacetonat)-europium(III) und

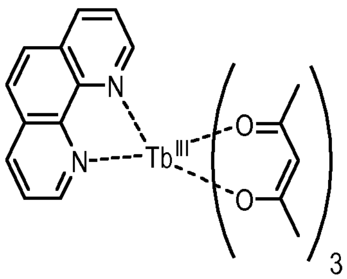

1,10-Phenanthrolin-tris-(acetylacetonat)-terbium(III)

Ein bevorzugter Photokatalysator ist Titandioxid, insbesondere als Bestandteil von optisch transparenten Beschichtungen auf im Wesentlichen katalytisch inaktiven Trägern, z.B. aus der Gruppe, die Glas, Metall, natürliche und synthetische Gewebe und ungewebte Gewebe sowie Kunststoffe umfasst.

Vergleichsbeispiel: Bestimmung der photokatalytischen Degradation von Lumogen F Orange

Als Beispiel für einen herkömmlichen Lumineszenz-Farbstoff wurde Lumogen F Orange (LUMI, BASF) auf eine inerte Oberfläche (Glas) aufgetragen, sowie auf verschiedene photokatalytisch aktiven $TiO_2$-Schichten, die als Probe 1, Probe 2, Probe 3, Probe 4, Probe 5 und Probe 6 bezeichnet sind. Anschließend wurden die Proben mit UV-Strahlung durch eine Handlampe bestrahlt, die die Katalysewellenlänge des Photokatalysators umfasst. Die vom Lumogen F Orange emittierte Strahlung wurde bei 515-545 nm detektiert.

Wie aus der Darstellung der Ergebnisse in Figur 1 hervorgeht, erlischt die vom Lumogen F Orange emittierte Strahlung sowohl auf dem photokatalytisch inaktiven Glas, als auch auf den photokatalytisch aktiven Probeoberflächen anfänglich sehr schnell und nähert sich gegen Ende der Messzeit asymptotisch einem Restwert. Dies zeigt am Beispiel von Lumogen F Orange, dass Lumineszenz-Farbstoffe nicht photostabil sind, sondern auch auf der inerten Oberfläche Glas dem autophotolytischen Abbau unterliegen. Weiterhin zeigen die quasi parallelen Vorläufe des Abklingens der verbleibenden Lumineszenz für die Proben 1 bis 6, die kaum auflösbar sind, dass Unterschiede nur mit sehr genauer Detektion bzw. nur mit großem Aufwand bzw. ungenau messbar sind, da die Proben sehr dicht zusammen liegende Detektionsergebnisse liefern.

Vorrichtung

Der schematische Aufbau einer Vorrichtung, die zur Verwendung im erfindungsgemäßen Verfahren geeignet ist, ist in Figur 2 gezeigt. Auf einer Halterung (nicht gezeigt) ist mit Indikatorverbindung 1 kontaktierter Photokatalysator 2 angeordnet. Als Alternative zu einer Suspension des Katalysatorfeststoffs 2 wird vorzugsweise auf einem Substrat 3 aufgebrachter Photokatalysator 2, der mit Indikatorverbindung 1 kontaktiert bzw. beschichtet ist, ohne Flüssigphase, z.B. ohne Lösungsmittel, verwendet. In einem Abstand zur Halterung ist eine erste Strahlungsquelle 4 angeordnet, z.B. in einem Winkel von 30-90°, so dass deren Strahlung in diesem Winkel auf den Photokatalysator 2 bzw. gegen das Substrat 3 gerichtet ist. Ein Detektor 5, vorzugsweise mit einem Filter, der nur Strahlung einer Emissionswellenlänge durchlässt und/oder eingestrahlte Strahlung blockiert, ist in einem Winkel gegen die Halterung gerichtet, vorzugsweise auf den Schnittpunkt der Strahlung, die von der ersten Strahlungsquelle 4 abgestrahlt wird, mit der Indikatorverbindung 1.

Für das Verfahren der zweiten Ausführungsform weist die Vorrichtung eine zweite Strahlungsquelle 6 auf, die bei einer kürzeren oder längeren Wellenlänge als die erste Strahlungsquelle 4 strahlt. Die zweite Strahlungsquelle 6 ist auf den Schnittpunkt der Strahlung, die von der ersten Strahlungsquelle 4 abgestrahlt wird, mit der Indikatorverbindung 1 gerichtet. Der Detektor 5 ist auf den Schnittpunkt der Strahlung der zweiten Strahlungsquelle 6 mit der Indikatorverbindung gerichtet, um die von der Indikatorverbindung emittierte Strahlung zu detektieren.

Beispiel 1: Synthese von Indikatorverbindungen

Als Beispiel für eine Indikatorverbindung wurde Terpyridin-tris-(hexafluoroacetylacetonat)-europium(III) in Anlehnung an Kang et al. (Bull. Korean Chem. Soc. 75-80 (1997)) mit den folgenden Syntheseschritten hergestellt:

> Ein 250 mL Dreihalskolben wird evakuiert und mit Stickstoff gespült. Unter Stickstoffatmosphäre wird Europium(III)chlorid-hexahydrat (1,12 g, 3 mmol) in destilliertem Wasser (5 mL) unter Rühren gelöst. Anschließend wird Acetonitril (20 mL) zugegeben. Über einen Feststofftrichter wird Terpyridin (800 mg, 3,4 mmol) zugegeben und weitere 30 mL Acetonitril. Es wird für 3 h unter Rückfluss gerührt. Zu dieser Reaktionsmischung wird Lösung 1 zugegeben, deren Herstellung nachfolgend beschrieben ist.

Für Lösung 1 werden in einem 100 mL Schlenk-Kolben unter Stickstoff Acetonitril (20 mL) und dest. Wasser (20 mL) vorgelegt. Es werden Hexafluoroacetylaceton (2.0 g, 9.4 mmol) und Kalium-tert-butylat (1,13 g, 9,6 mmol) zugegeben und 15 min bei Raumtemperatur gerührt. Lösung 1 wird anschließend langsam zu der Reaktionsmischung gegeben. Unter Stickstoff wird für 16 h unter Rückfluss gerührt. Unter vermindertem Druck wird anschließend das Reaktionsgemisch eingeengt. Der Niederschlag wird über einen Büchner-Trichter filtriert und mit wenig Ethanol und dest. Wasser gewaschen. Die Substanz wird im Hochvakuum getrocknet. Es wird ein weißer Feststoff (2,7 g, 2,7 mmol, Gesamtausbeute 90 %) erhalten.

Europium(III)chlorid-hexahydrat kann für andere Metalle in der Indikatorverbindung durch Chloride anderer Seltenerdmetalle ersetzt werden, z.B. Terbium(III)chlorid-hexahydrat. Die Verwendung von Terpyridin zur Herstellung des Ligandensystems A kann durch andere Vorläufer der Liganden ersetzt werden, z.B. durch 1,10-Phenanthrolin; Hexafluoroacetylaceton kann durch andere Verbindungen zur Herstellung des Ligandensystems B ersetzt werden, z.B. durch Acetylaceton und/oder Thienyltrifluoracetylaceton. Anstelle von Kalium-tert-butylat ist Verwendung anderer Basen ist möglich, z.B. Natriumhydroxid oder Natriumhydrid.

In Anlehnung an de Silva et al., Thin Solid Films 957-962 (2008) und den dort genannten Veröffentlichungen von da Silva (Polyhedron 25 (2006) 3449, Polyhedron 26 (2007) 1229 und Inorg. Chim. Acta 360 (2007) 3543) wurde 2,4,6-Tris(2-pyridyl)-triazin-tris-(hexafluoroacetylacetonat)-europium(III) mit einer Gesamtausbeute von bis zu 61% synthetisiert.

Die Figur 3 zeigt das Absorptionsspektrum von Terpyridin-tris-(hexafluoroacetylacetonat)-europium(III), das in verschiedenen Schichtdicken auf Glas im Vakuum aufgedampft wurde, Figur 4 das Absorptionsspektrum von 1,10-Phenanthrolin-tris-(acetylacetonat)-terbium(III) als Feststoff, d.h. ohne Flüssigphase bzw. ohne Lösungsmittel.

Der Wellenlängenbereich der Absorption der Indikatorverbindungen von 250 bis 350 nm kann durch eine Bestrahlung erfasst werden, die auch die Katalysewellenlänge des bevorzugt gemessenen Photokatalysators $TiO_2$ von ca. 355 bzw. 405 nm umfasst, z.B. mit einer UV-Lampe. Diese Indikatorverbindungen eignen sich daher für die erste Ausführungsform. Da die Verbindungen bei höheren Wellenlängen, z.B. 405 - 450 nm, wesentlich geringer als $TiO_2$ oder nicht absorbieren, können sie alternativ bei Bestrahlung mit einer Katalysewellenlänge in diesem Bereich für die zweite Ausführungsform verwendet werden und entsprechend mit einer separaten Induktionswellenlänge im Bereich ihrer Absorption angeregt werden.
Figur 5 zeigt ein Emissionsspektrum, das für eine erfindungsgemäße Europium-haltige Indikatorverbindung als Feststoff gemessen wurde und
Figur 6 zeigt ein Emissionsspektrum, das für eine erfindungsgemäße Terbium-haltige Indikatorverbindung als Feststoff

gemessen wurde.

Diese Messwerte machen am Beispiel der Europium- bzw. Terbium-haltigen Verbindung deutlich, dass erfindungsgemäß verwendete Seltenerdmetall-haltige Indikatorverbindungen bei Wellenlängen größer als die Katalysewellenlänge emittieren.

Es hat sich gezeigt, dass die Emission der im erfindungsgemäßen Verfahren verwendeten Verbindungen im Wesentlichen vom enthaltenen Seltenerdmetall abhängt, bzw. von den organischen Ligandensystemen unabhängig ist. Entsprechend haben erfindungsgemäße Verbindungen zumindest für eine Emissionswellenlänge einen Abstand zur Katalysewellenlänge, bzw. einen großen Stokes-Abstand, so dass die Emission im Wesentlichen unbeeinflußt von der eingestrahlten Induktions- und Katalysewellenlänge detektiert werden kann.

<u>Beispiel 2: Messung der photokatalytischen Aktivität einer katalytisch aktiven Oberfläche mit erfindungsgemäßer Verbindung</u>

Als Beispiel für eine erfindungsgemäße Verbindung wurde Terpyridin-tris-(hexafluoroacetylacetonat)-europium(III) verwendet und auf eine Glasoberfläche aufgedampft, die als photokatalytische Vergleichsoberfläche verwendet wurde, und auf verschiedene mit Titandioxid beschichtete Glasoberflächen. Die Beschichtung aus der Indikatorverbindung wurde durch Aufdampfen im Vakuum hergestellt.

Die Oberflächen wurden wie in dem Vergleichsbeispiel beschrieben mit Bestrahlung der Katalysewellenlänge für $TiO_2$ bestrahlt. Die erfindungsgemäße Verbindung wurde durch die UV-Bestrahlung ebenfalls angeregt, so dass entsprechend der ersten Ausführungsform ein Wellenlängenbereich als Katalyse- und Induktionswellenlänge verwendet wurde; die emittierte Strahlung wurde bei 600-650 nm detektiert.

Figur 7 zeigt den Verlauf der Emission für die nicht-katalytische Glasoberfläche bei 1 und macht deutlich, dass die erfindungsgemäße Indikatorverbindung auf der photokatalytisch nicht aktiven Glasoberfläche nur einem sehr geringen photolytischen Abbau unterliegt, der jedenfalls deutlich geringer ist als der autophotolytische Abbau von Lumogen F Orange auf Glas und überdies deutlich langsamer als der photokatalytische Abbau auf der $TiO_2$-Oberfläche ist. Mit Ziffern 2 bis 5 sind Messwerte für die verschiedenen $TiO_2$-Schichten gekennzeichnet. Diese zeigen, dass die Emission erfindungsgemäß verwendeter Verbindungen auf unterschiedlichen photokatalytisch aktiven Schichten mit jeweils signifikant abweichender Intensität und Degradationsrate detektiert wird, so dass die photokatalytische Aktivität verschiedener Schichten quantitativ bei kontinuierlicher Detektion oder bei Detektion bei zumindest 2 Zeitpunkten analysierbar ist.

Weiterhin zeigt dieses Beispiel, dass das Verfahren unter Verwendung der erfindungsgemäßen Indikatorverbindung zur Detektion einer für die photokatalytische Aktivität eines photokatalytisch aktiven Feststoffs geeignet ist, auch wenn die erfindungsgemäß verwendete Indikatorverbindung ohne Lösungs- oder Solubilisierungsmedium, d.h. in Festphase auf der photokatalytisch aktiven Verbindung vorliegt.

## Patentansprüche

1. Verfahren zur Bestimmung der Aktivität einer photokatalytisch aktiven Verbindung mit den Schritten
   des Bereitstellens der photokatalytisch aktiven Verbindung,
   des Kontaktierens der photokatalytisch aktiven Verbindung mit einer in Gegenwart der photokatalytisch aktiven Verbindung unter Bestrahlung degradierbaren Indikatorverbindung,
   des Bestrahlens der photokatalytisch aktiven Verbindung, die mit der degradierbaren Indikatorverbindung kontaktiert ist, mit Strahlung einer die Aktivität der photokatalytisch aktiven Verbindung aktivierenden Katalysewellenlänge,
   des Bestrahlens der Indikatorverbindung mit Strahlung einer deren Emission induzierenden Induktionswellenlänge,
   des Detektierens der von der photokatalytisch degradierbaren Verbindung emittierten Strahlung,
   **dadurch** gekennzeichet, **dass** die Indikatorverbindung eine Struktur der Formel I aufweist

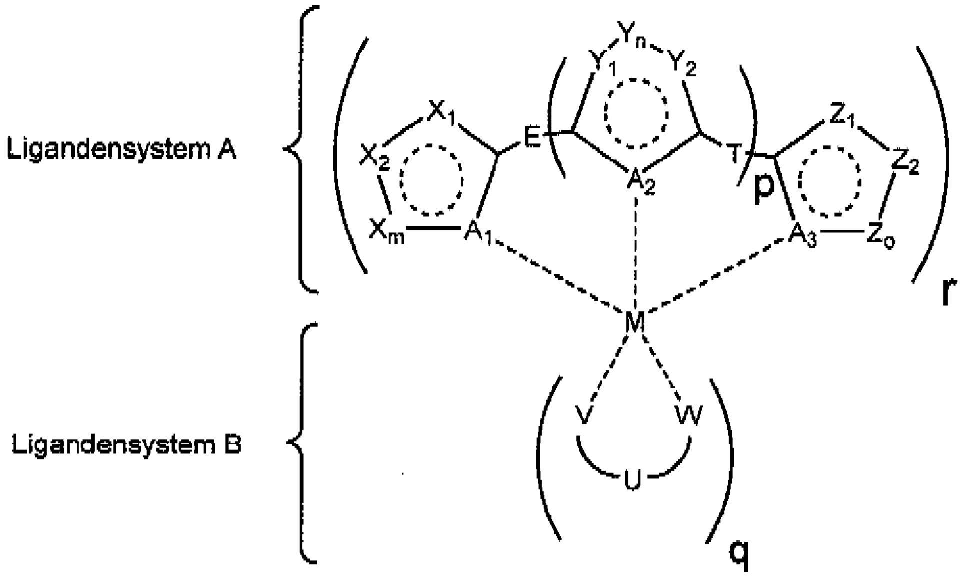


(I),

wobei M ein Seltenerdmetallion ist, wobei das Seltenerdmetall ausgewählt ist aus Europium und Terbium, die Ligandensysteme A und B insgesamt eine gegenüber M kompensierende Ladung aufweisen, p = 0, 1, 2, oder 3 ist, q = 0, 1, 2, 3, 4 oder 5 ist, r = 1, 2 oder 3 ist, m, n und o = 1, 2, 3 oder 4 ist, E und T unabhängig voneinander eine Bindung oder 1 bis 3 Atome sind, $X_1$, $X_2$, $X_m$, $Y_1$, $Y_2$, $Y_n$, $Z_1$, $Z_2$, $Z_o$ unabhängig voneinander aus der Gruppe ausgewählt sind, die C, O, S, N, Se umfasst,
A1, A2, A3 neutrale oder negativ geladene Atome sind, die unabhängig voneinander aus der Gruppe ausgewählt sind, die C, O, S, N, Se umfasst, und
V, W unabhängig voneinander aus der Gruppe ausgewählt sind, die C, O, S, N, Se umfasst und
U eine zwischen V und W angeordnete Gruppe aus 1 bis 5 Atomen aufweist, die aus der Gruppe ausgewählt sind, die C, N, O, S und Se umfasst.

2. Verfahren nach Anspruch 1, **dadurch** gekennzeichet, **dass** aromatische Gruppen jeweils unabhängig an $X_1$, $X_2$, $X_m$, $Y_1$, $Y_2$, $Y_n$, $Z_1$, $Z_2$, $Z_o$ substituiert sind.

3. Verfahren nach Anspruch 1 oder 2, **dadurch gekennzeichnet, dass** E und T unabhängig voneinander aus der Gruppe ausgewählt sind, die N, C, O und S enthält.

4. Verfahren nach einem der voranstehenden Ansprüche, **dadurch gekennzeichnet, dass** E und T anstelle von H mit C1- bis C12-Kohlenwasserstoffgruppen substituiert sind, die optional Heteroatome enthalten.

5. Verfahren nach einem der voranstehenden Ansprüche, **dadurch gekennzeichnet, dass** U aus der Gruppe ausgewählt ist, die eine -C=C-N- -Gruppe, eine Phenylen-, Thienylen-, Methylen-, Trifluormethylen-, Ethylen-, Ethenylen-, Propylen-, Propenylen-, Ethyliden- und Ethinylen-Gruppe umfasst.

6. Verfahren nach einem der voranstehenden Ansprüche, **dadurch gekennzeichnet, dass** U, V und/oder W mit zumindest einer C1- bis C6- (Hetero)alkyl- und/oder (Hetero)arylgruppe und/oder (Hetero)aromatengruppe substituiert ist.

7. Verfahren nach einem der voranstehenden Ansprüche, **dadurch gekennzeichnet, dass** das Ligandensystem B aus der Gruppe ausgewählt ist, die

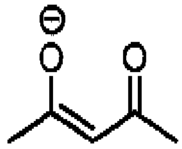

Acetylacetonat (acac),

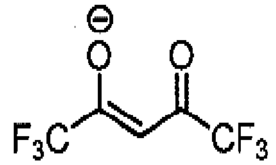

Hexafluoroacetylacetonat (hfac),

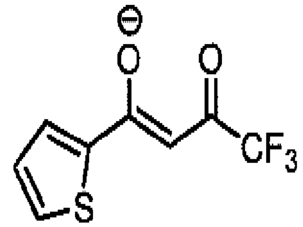

Thienyltrifluormethylacetylacetonat, (ttfa)

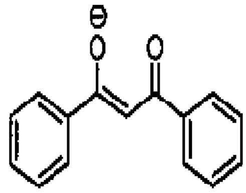

Dibenzoylmethan (DBM),

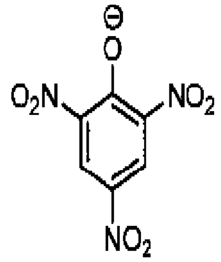

Pikrat,

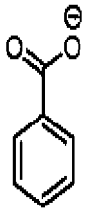

Benzoat,

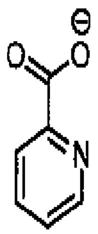

Pikolinat,

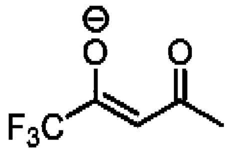

Trifluoroacetylacetonat,

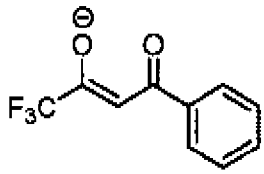

Benzyltrifluormethylacetylacetonat

und/oder

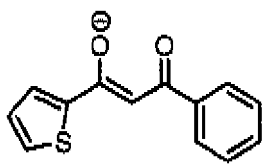

umfasst.

8. Verfahren nach einem der voranstehenden Ansprüche, **dadurch gekennzeichnet, dass** die Verbindung ein Derivat gemäß Formel II ist

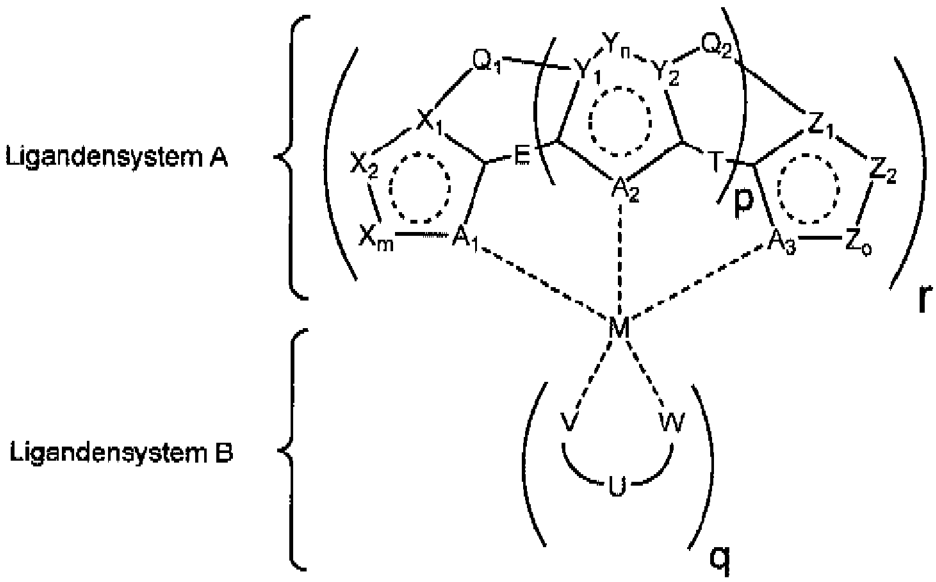


(II),

wobei Q1 und Q 2 unabhängig voneinander eine chemische Bindung, ein Atom oder eine Gruppe mit 1 bis 6 Atomen ist, die aus der Gruppe ausgewählt sind, die C, O, S, N und Se umfasst.

**9.** Verfahren nach einem der voranstehenden Ansprüche, **dadurch gekennzeichnet, dass** die photokatalytisch aktive Verbindung ohne flüssige Phase vorliegt.

**10.** Verfahren nach einem der Ansprüche 1 bis 8, **dadurch gekennzeichnet, dass** die photokatalytisch aktive Verbindung in flüssiger Phase suspendiert vorliegt.

**11.** Verfahren nach einem der voranstehenden Ansprüche, **dadurch gekennzeichnet, dass** die Katalysewellenlänge die Induktionswellenlänge umfasst.

**12.** Verfahren nach einem der Ansprüche 1 bis 10, **dadurch gekennzeichnet, dass** während der Detektion der von der photokatalytisch degradierbaren Verbindung emittierten Strahlung eine Induktionswellenlänge kürzer als die Katalysewellenlänge oder eine Induktionswellenlänge länger als die Katalysewellenlänge auf die mit Indikatorverbindung kontaktierte photokatalytisch aktive Verbindung eingestrahlt wird.

**13.** Verfahren nach Anspruch 12, **dadurch gekennzeichnet, dass** die Induktionswellenlänge kürzer als 350 nm und gepulst ist.

**14.** Verfahren nach einem der voranstehenden Ansprüche, **dadurch gekennzeichnet, dass** die photokatalytisch aktive Verbindung Titandioxid aufweist und die Katalysewellenlänge im Bereich von 350-450 nm ist.

**15.** Verfahren nach einem der voranstehenden Ansprüche, dadurch gekennzeichet, dass die photokatalytisch degradierbare Verbindung aus einer Verbindung der Formel I oder Formel II besteht.

**16.** Verwendung einer Verbindung gemäß Formel I

Ligandensystem A

Ligandensystem B

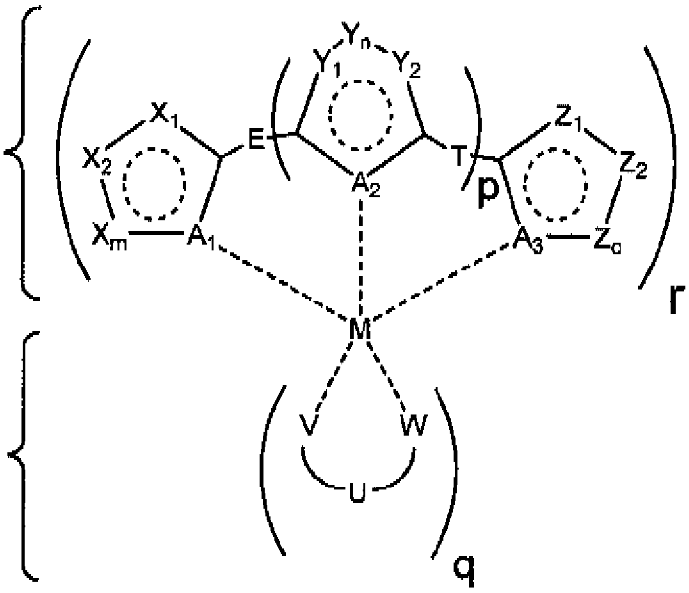

(I),

wobei

M ein Seltenerdmetallion ist, wobei das Seltenerdmetall ausgewählt ist aus Europium und Terbium,
die Ligandensysteme A und B insgesamt eine gegenüber M kompensierende Ladung aufweisen,
p = 0, 1, 2, oder 3 ist, q = 0, 1, 3, 4 oder 5 ist, r = 1, 2 oder 3 ist, m, n und o = 1, 2, 3 oder 4 ist,
E und T unabhängig voneinander eine Bindung oder 1 bis 3 Atome sind,
$X_1$, $X_2$, $X_m$, $Y_1$, $Y_2$, $Y_n$, $Z_1$, $Z_2$, $Z_o$ unabhängig voneinander aus der Gruppe ausgewählt sind, die C, O, S, N, Se umfasst,
A1, A2, A3 neutrale oder negativ geladene Atome sind, die unabhängig voneinander aus der Gruppe ausgewählt sind, die C, O, S, N, Se umfasst, und
V, W unabhängig voneinander aus der Gruppe ausgewählt sind, die C, O, S, N, Se umfasst und
U eine zwischen V und W angeordnete Gruppe aus 1 bis 5 Atomen aufweist, die aus der Gruppe ausgewählt sind, die C, N, O, S und Se umfasst,
in einem Verfahren zur Messung der photokatalytischen Aktivität eines Feststoffs.

17. Verwendung nach Anspruch 16, **dadurch gekennzeichnet, dass** die photokatalytisch degradierbare Verbindung ein Derivat gemäß Formel II

Ligandensystem A

Ligandensystem B

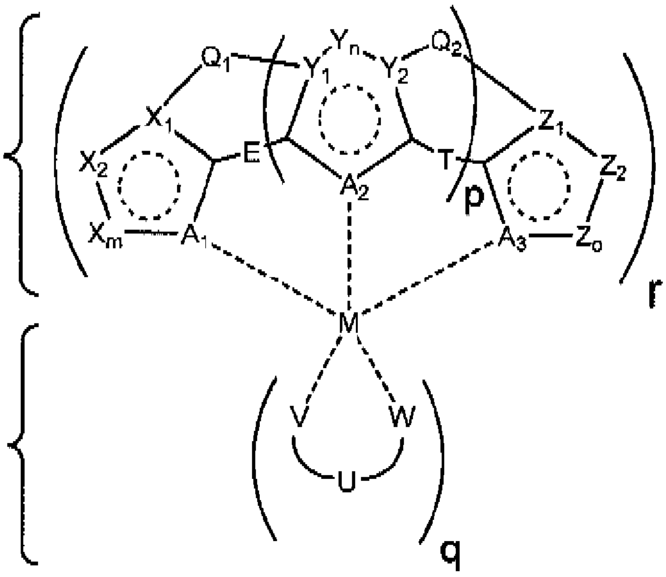

(II)

ist, wobei Q1 und Q 2 unabhängig voneinander eine chemische Bindung, ein Atom oder eine Gruppe mit 1 bis 6 Atomen ist, die aus der Gruppe ausgewählt sind, die C, O, S, N und Se umfasst.

**18.** Verwendung nach einem der Anspruche 16bis 17, **dadurch gekennzeichnet, dass** das Ligandensystem B aus der Gruppe ausgewählt ist, die

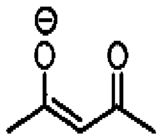

Acetylacetonat (acac),

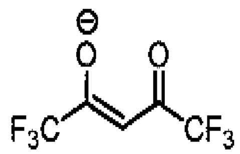

Hexafluoroacetylacetonat (hfac),

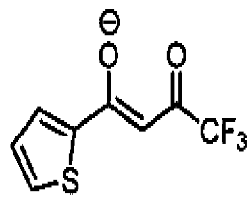

Thienyltrifluormethylacetylacetonat, (ttfa)

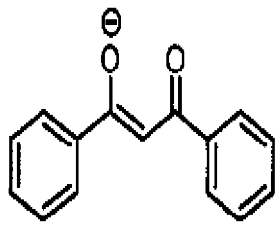

Dibenzoylmethan (DBM),

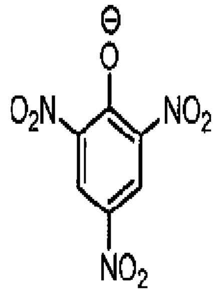

Pikrat,

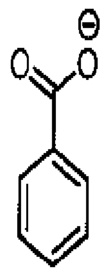

Benzoat,

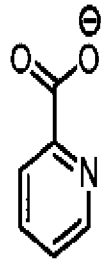 Pikolinat, 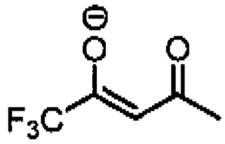 Trifluoroacetylacetonat, 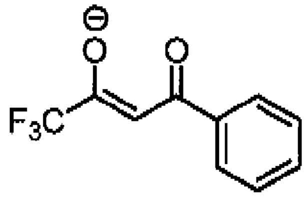 Benzyltrifluormethylacetylacetonat

und/oder

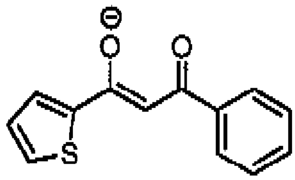

umfasst.

**19.** Verwendung einer Vorrichtung mit einer ersten Strahlungsquelle (4), die auf eine Halterung zur Aufnahme einer mit einer photokatalytisch degradierbaren Verbindung (1) kontaktierten photokatalytisch aktiven Verbindung (2) gerichtet ist, einer zweiten Strahlungsquelle (6), die auf die Halterung gerichtet ist, und mit einem Detektor (5), der auf die Halterung gerichtet ist, in einem Verfahren nach einem der Ansprüche 1 bis 14.

**20.** Verwendung einer Vorrichtung nach Anspruch 19, **dadurch gekennzeichnet, dass** die zweite Strahlungsquelle (6) gepulst ist.

## Claims

**1.** Process for the determination of the activity of a photo-catalytically active compound comprising the steps of providing the photo-catalytically active compound,
contacting the photo-catalytically active compound with an indicator compound that is degradable under irradiation in the presence of the photo-catalytically active compound, irradiating the photo-catalytically active compound which is contacted with the degradable indicator compound using irradiation having a catalyzing wavelength activating the activity of the photo-catalytically active compound,
irradiating the indicator compound using irradiation of an inductor wavelength inducing its emission,
detecting the irradiation emitted by the photo catalytically degradable compound, **characterized in that** the indicator compound has a structure according to formula I

ligand system A

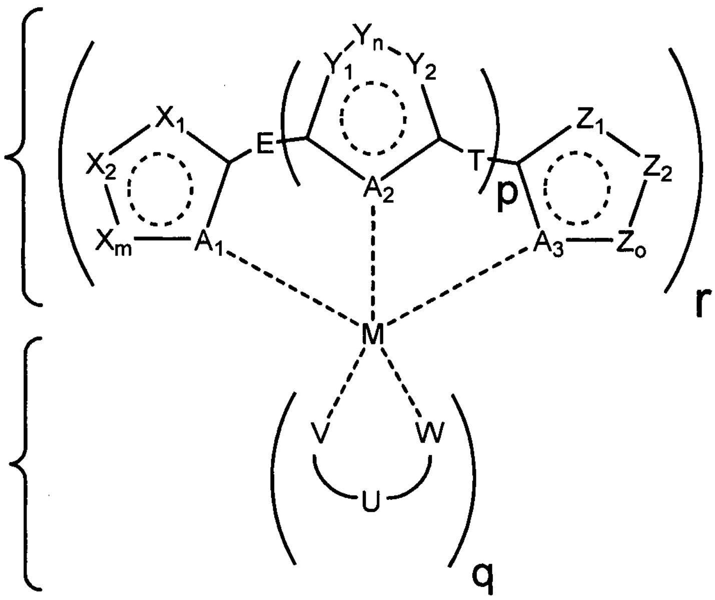

ligand system B

(I)

wherein M is a rare earth metal iron, wherein the rare earth metal is selected from Europium and Terbium, the ligand systems A and B in total have a charge compensating M,
p = 0, 1, 2 or 3, q = 0, 1, 2, 3, 4 or 5, r = 1, 2 or 3, m, n and o = 1, 2, 3 or 4,
E and T independently from one another are a bond or 1 to 3 atoms,
$X_1$, $X_2$, $X_m$, $Y_1$, $Y_2$, $Y_n$, $Z_1$, $Z_2$, $Z_o$ independently from one another are selected from the group comprising C, O, S, N, Se,
A1, A2, A3 are neutral or negatively charged atoms which independently from one another are selected from the group comprising C, O, S, N, Se, and
V, W are independently from one another are selected from the group comprising C, O, S, N, Se and
U comprises a group arranged between V and W of 1 to 5 atoms, which are selected from the group comprising C, N, O, S and Se.

2. Process according to claim 1, **characterized in that** the metal groups, each independently, are substituted at $X_1$, $X_2$, $X_m$, $Y_1$, $Y_2$, $Y_n$, $Z_1$, $Z_2$, $Z_o$.

3. Process according to claim 1 or 2, **characterized in that** E and T independently from one another are selected from the group comprising N, C, O and S.

4. Process according to one of the preceding claims, wherein E and T in lieu of H are substituted by C1 to C12 hydrocarbon groups, which optionally contain hetero atoms.

5. Process according to one of the preceding claims, **characterized in that** U is selected from the group comprising a -C=C-N-group, a phenylene, thienylene, methylene, trifluormethylene, ethylene, ethenylene, propylene, propenylene, ethylidene and ethinylenegroup.

6. Process according to one of the preceding claims, **characterized in that** U, V and/or W are substituted with at least one C1 to C6 (hetero)alkyl- and/or (hetero)aryl group and/or (hetero)aromatic group.

7. Process according to one of the preceding claims, **characterized in that** the ligand system B is selected from the group comprising

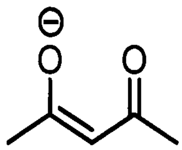 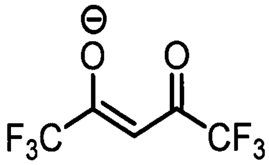 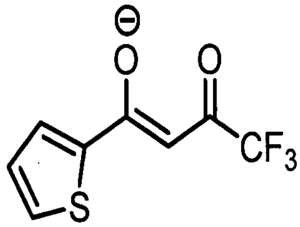

acetylacetonate (acac), hexafluoroacetylacetonate (hfac), thienyltrifluormethylacetylacetonate, (ttfa)

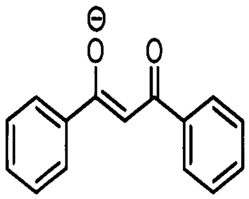 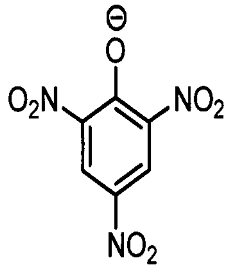 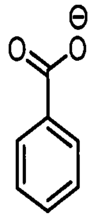

dibenzoylmethane (DBM), pikrate, benzoate,

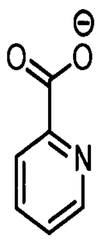 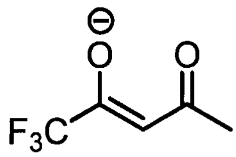 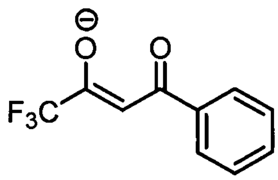

pikolinate, trifluoroacetylacetonate, benzyltrifluormethylacetylacetonate

and/or

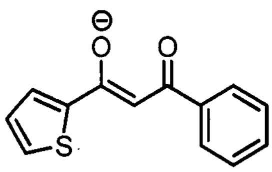

**8.** Process according to one of the preceding claims, **characterized in that** the compound is a derivative according to formula II,

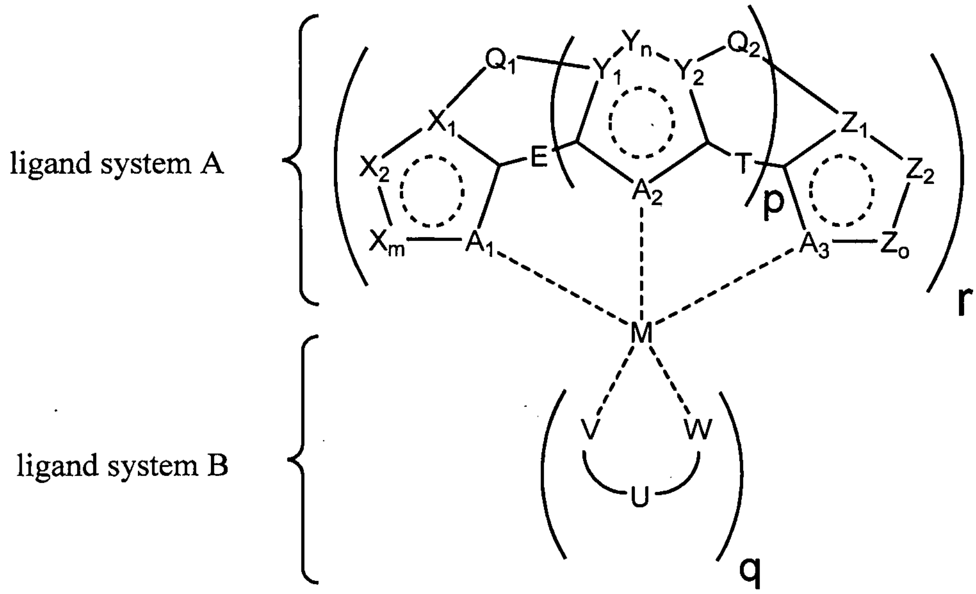


(II)

wherein Q1 and Q2 independent by from one another are a chemical bond, an atom or a group having 1 to 6 atoms, which are selected from the group comprising C, O, S, N and Se.

**9.** Process according to one of the preceding claims, **characterized in that** the photo-catalytically active compound is present without liquid phase.

**10.** Process according to one of claims 1 to 8, **characterized in that** the photo catalytically active compound is present suspended in a liquid phase.

**11.** Process according to one of the preceding claims, **characterized in that** the catalytic wavelength comprises the induction wavelength.

**12.** Process according to one of claims 1 to 10, **characterized in that** during the detection of the irradiation emitted by the photo-catalytically degradable compound an induction wavelength shorter than the catalytic wavelength or an induction wavelength longer than the catalytic wavelength is irradiated onto the photo catalytically active compound contacted by the indicator compound.

**13.** Process according to claim 12, **characterized in that** the induction wavelength is shorter than 350 nm and pulsed.

**14.** Process according to one of the preceding claims, **characterized in that** the photo-catalytically active compound comprises titanium dioxide and the catalytic wavelength is in the range of 350 - 450 nm.

**15.** Process according to one of the preceding claims, **characterized in that** the photo-catalytically degradable compound consists of a compound of formula I or formula II.

**16.** Use of a compound according to formula I, wherein

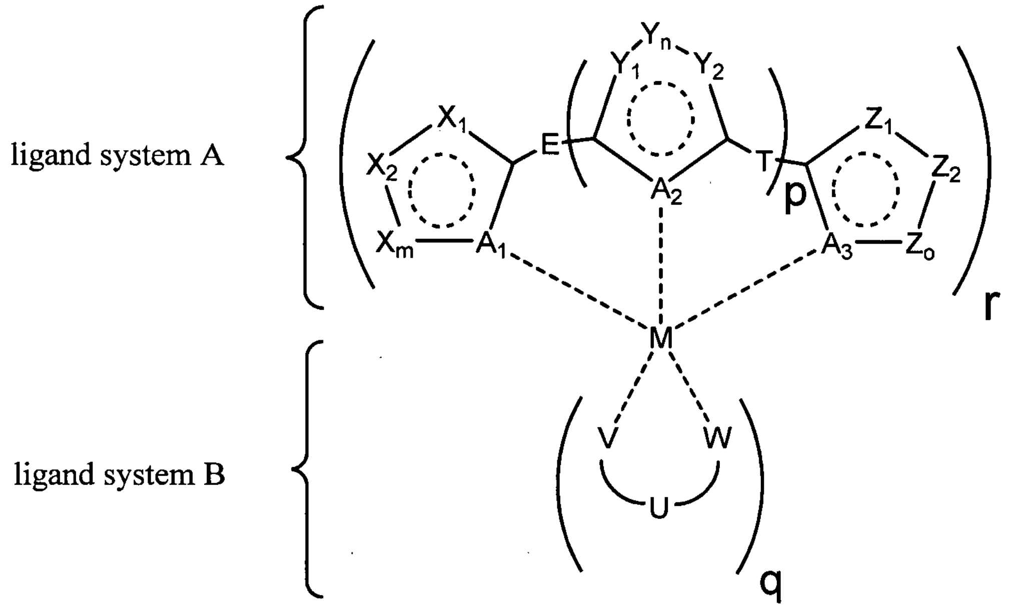

(I),

wherein M is a rare earth metal iron, wherein the rare earth metal is selected from Europium and Terbium, the ligand systems A and B in total have a charge compensating M, p = 0, 1, 2 or 3, q = 0, 1, 2, 3, 4 or 5, r = 1, 2 or 3, m, n and o = 1, 2, 3 or 4,

E and T independently from one another are a bond or 1 to 3 atoms,

$X_1$, $X_2$, $X_m$, $Y_1$, $Y_2$, $Y_n$, $Z_1$, $Z_2$, $Z_o$ independently from one another are selected from the group comprising C, O, S, N, Se,

A1, A2, A3 are neutral or negativly charged atoms which independently from one another are selected from the group comprising C, O, S, N, Se, and

V, W are independently from one another are selected from the group comprising C, O, S, N, Se and

U comprises a group arranged between V and W of 1 to 5 atoms, which are selected from the group comprising C, N, O, S and Se,

in a process for measuring the photo-catalytic activity of a solid.

**17.** Use according to claim 16, **characterized in that** the photo catalytically degradable compound is a derivative according to formula II,

ligand system A

ligand system B

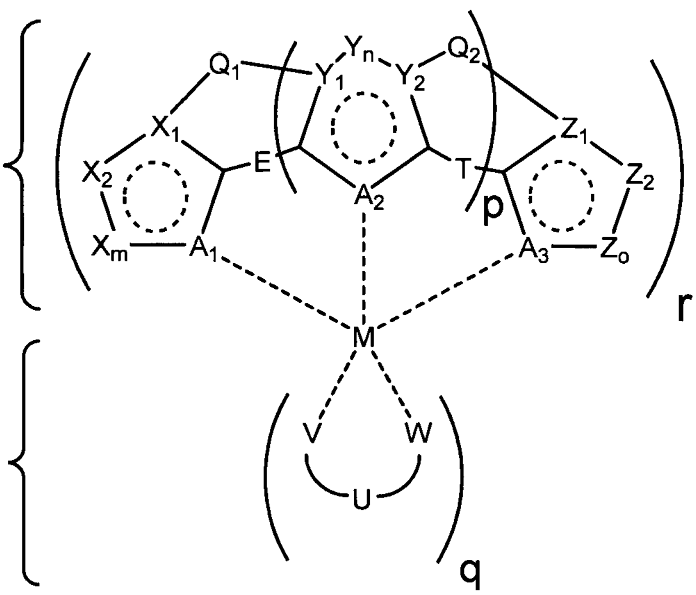

(II)

wherein Q1 and Q2 independent by from one another are a chemical bond, an atom or a group having 1 to 6 atoms, which are selected from the group comprising C, O, S, N and Se.

18. Use according to one of claims 16 to 17, **characterized in that** the ligand system B is selected from the group comprising

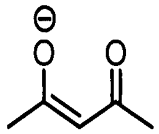

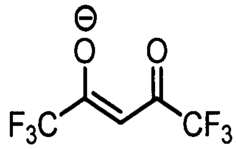

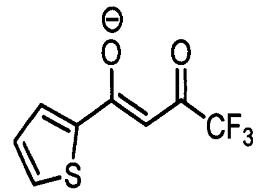

acetylacetonate (acac), hexafluoroacetylacetonate (hfac), thienyltrifluormethylacetylacetonate, (ttfa)

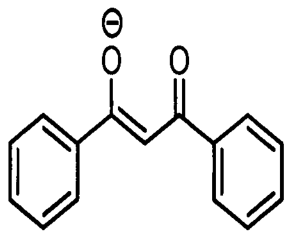

dibenzoylmethane (DBM),

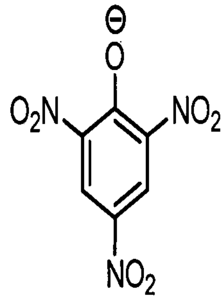

pikrate,

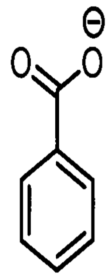

benzoate,

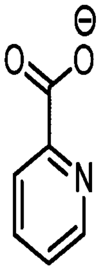 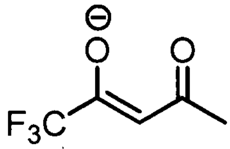 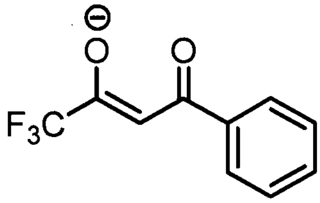

pikolinate, trifluoroacetylacetonate, benzyltrifluormethylacetylacetonate

and/or

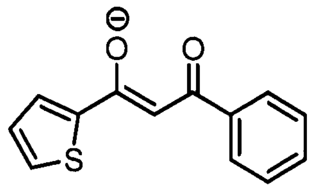

19. Use of a device having a first irradiation source (4) which is directed onto a mounting for receiving a photo-catalytically active compound (2) which is contacted by a photo-catalytically degradable compound (1), having a second irradiation source (6), which is directed onto the mounting, and having a detector (5) directed onto the mounting, in a process according to one of claims 1 to 15.

20. Use of a device according to claim 19, **characterized in that** the second irradiation source (6) is pulsed.

**Revendications**

1. Procédé pour déterminer l'activité d'un composé à action photocatalytique comportant les étapes suivantes :

Fourniture du composé à action photocatalytique,
Mise en contact du composé à action photocatalytique avec un indicateur dégradable sous l'effet d'un rayonnement en présence du composé à action photocatalytique,
L'irradiation du composé à action photocatalytique mis en contact avec l'indicateur dégradable, avec un rayonnement d'une longueur d'onde de catalyse qui active l'activité du composé à action photocatalytique,
L'irradiation de l'indicateur avec un rayonnement d'une longueur d'onde d'induction induisant son émission,
La détection du rayonnement émis par le composé dégradable par photocatalyse,
**caractérisé en ce que** l'indicateur présente une structure de formule I

Système de ligands A

Système de ligands B

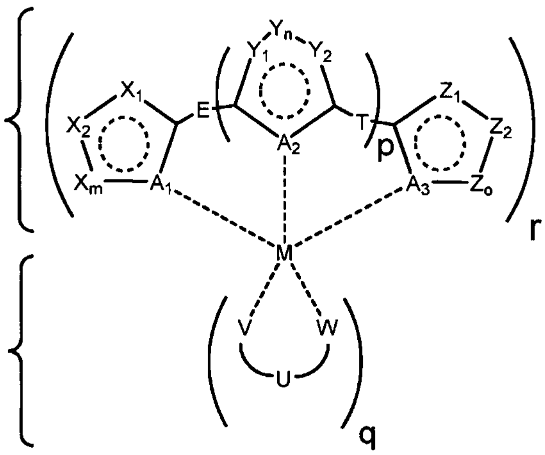

(I),

dans laquelle M est un ion métallique de terres rares, le métal de terres rares étant choisi parmi l'europium et le terbium,
les systèmes de ligands A et B présentent au total une charge compensatrice par rapport à M
p = 0, 1, 2 ou 3, q = 0, 1, 2, 3, 4 ou 5, r = 1, 2 ou 3,
m, n et o = 1, 2, 3 ou 4,
E et T, indépendamment l'un de l'autre sont un composé ou 1 à 3 atomes,
$X_1$, $X_2$, $X_m$, $Y_1$, $Y_2$, $Y_n$, $Z_1$, $Z_2$, $Z_o$ sont choisis, indépendamment l'un de l'autre, dans le groupe constitué de C, O, S, N, Se,
A1, A2, A3 sont des atomes à charge neutre ou négative choisis, indépendamment l'un de l'autre, dans le groupe constitué de C, O, S, N, Se et
V, W sont choisis, indépendamment l'un de l'autre, dans le groupe constitué de C, 0, S, N, Se et
U présente un groupe de 1 à 5 atomes, disposé entre V et W, choisis dans le groupe constitué de C, N, O, S et Se.

2. Procédé selon la revendication 1, **caractérisé en ce que** des groupes aromatiques sont substitués respectivement, indépendamment l'un de l'autre, sur $X_1$, $X_2$, $X_m$, $Y_1$, $Y_2$, $Y_n$, $Z_1$, $Z_2$, $Z_o$.

3. Procédé selon la revendication 1 ou la revendication 2, **caractérisé en ce que** E et T, indépendamment l'un de l'autre, sont choisis dans le groupe contenant N, C, O et S.

4. Procédé selon l'une quelconque des revendications précédentes, **caractérisé en ce que** E et T sont substitués, à la place de H, par des groupes hydrocarbures en C1 à C12 qui contiennent, en option, des hétéroatomes.

5. Procédé selon l'une quelconque des revendications précédentes, **caractérisé en ce que** U est choisi dans le groupe comprenant un groupe -C=C-N-, un groupe phénylène, thiénylène, méthylène, trifluorométhylène, éthylène, éthénylène, propylène, propénylène, éthylidène et éthinylène.

6. Procédé selon l'une quelconque des revendications précédentes, **caractérisé en ce que** U, V et/ou W est substitué par au moins un groupe (hétéro)alkyle et/ou (hétéro)aryle et/ou un groupe (hétéro)aromatique en C1 à C6.

7. Procédé selon l'une quelconque des revendications précédentes, **caractérisé en ce que** le système de ligands B est choisi dans le groupe comprenant

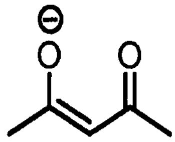

l'acétonate d'acétyle (acac)

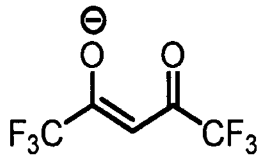

l'acétonate d'hexa-fluoroacétyle (hfac)

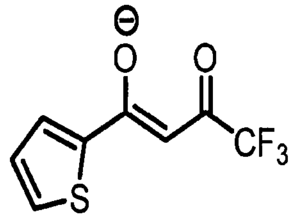

l'acétonate de thyényltrifluoro-méthylacétyle (ttfa)

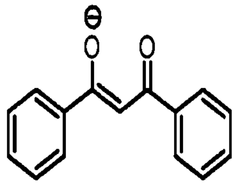

le dibenzoylméthane (DBM),

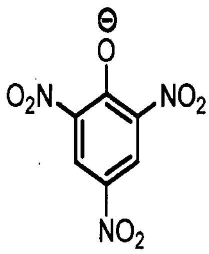

le picrate,

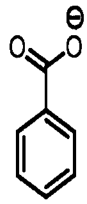

le benzoate,

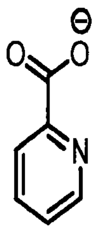

le picolinate,

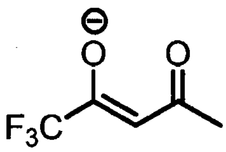

l'acétonate de trifluoroacétyle

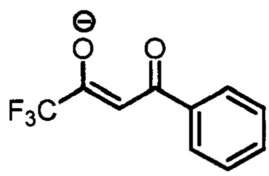

l'acétonate de benzyl-trifluorométhylacétyle

et/ou

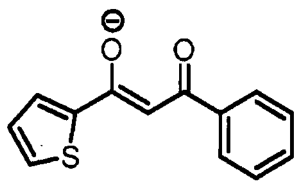

.

**8.** Procédé selon l'une quelconque des revendications précédentes, **caractérisé en ce que** le composé est un dérivé selon la formule II

Système de ligands A

Système de ligands B

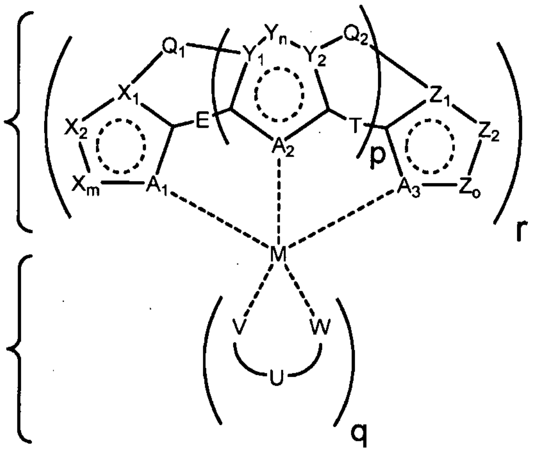

(II),

dans laquelle Q1 et Q2, indépendamment l'un de l'autre, sont une liaison chimique, un atome ou un groupe portant 1 à 6 atomes choisis dans le groupe comprenant C, 0, S, N et Se.

**9.** Procédé selon l'une quelconque des revendications précédentes, **caractérisé en ce que** le composé à action photocatalytique est présent sans phase liquide.

**10.** Procédé selon l'une quelconque des revendications 1 à 8, **caractérisé en ce que** le composé à action photocatalytique est en suspension dans une phase liquide.

**11.** Procédé selon l'une quelconque des revendications précédentes, **caractérisé en ce que** la longueur d'onde de catalyse comprend la longueur d'onde d'induction.

**12.** Procédé selon l'une quelconque des revendications 1 à 10, **caractérisé en ce que**, pendant la détection du rayonnement émis par le composé dégradable par photocatalyse, on irradie une longueur d'onde d'induction plus courte que la longueur d'onde de catalyse ou une longueur d'onde d'induction plus longue que la longueur d'onde de catalyse sur le composé à action photocatalytique mis en contact avec l'indicateur.

**13.** Procédé selon la revendication 12, **caractérisé en ce que** la longueur d'onde d'induction est inférieure à 350 nm et pulsée.

**14.** Procédé selon l'une quelconque des revendications précédentes, **caractérisé en ce que** le composé à action photocatalytique contient du dioxyde de titane et **en ce que** la longueur d'onde de catalyse est située dans la plage de 350 à 450 nm.

**15.** Procédé selon l'une quelconque des revendications précédentes, **caractérisé en ce que** le composé dégradable par photocatalyse est constitué d'un composé de formule I ou de formule II.

**16.** Utilisation d'un composé selon la formule I

Système de ligands A

Système de ligands B

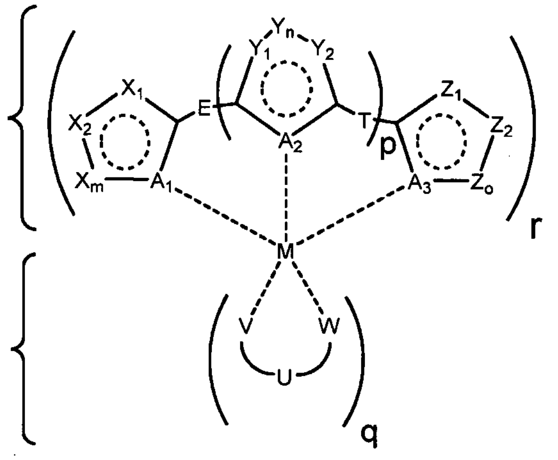

(I),

dans laquelle M est un ion métallique de terres rares, le métal de terres rares étant choisi parmi l'europium et le terbium,

les systèmes de ligands A et B présentent au total une charge compensatrice par rapport à M

p = 0, 1, 2 ou 3, q = 0, 1, 2, 3, 4 ou 5, r = 1, 2 ou 3,

m, n et o = 1, 2, 3 ou 4,

E et T, indépendamment l'un de l'autre sont, un composé ou 1 à 3 atomes,

$X_1$, $X_2$, $X_m$, $Y_1$, $Y_2$, $Y_n$, $Z_1$, $Z_2$, $Z_o$ sont choisis, indépendamment l'un de l'autre, dans le groupe constitué de C, O, S, N, Se,

A1, A2, A3 sont des atomes à charge neutre ou négative choisis, indépendamment l'un de l'autre, dans le groupe constitué de C, O, S, N, Se et

V, W sont choisis, indépendamment l'un de l'autre, dans le groupe constitué de C, O, S, N, Se et

U présente un groupe de 1 à 5 atomes, disposé entre V et W, choisis dans le groupe constitué de C, N, O, S et Se.

17. Utilisation selon la revendication 16, **caractérisée en ce que** le composé est un dérivé selon la formule II.

Système de ligands A

Système de ligands B

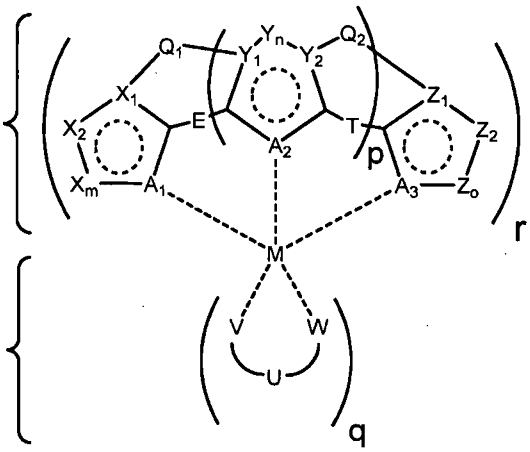

(II),

dans laquelle Q1 et Q2, indépendamment l'un de l'autre, sont une liaison chimique, un atome ou un groupe portant 1 à 6 atomes choisis dans le groupe comprenant C, O, S, N et Se.

18. Utilisation selon l'une quelconque des revendication 16 à 17, **caractérisée en ce que** le système de ligands B est choisi dans le groupe comprenant

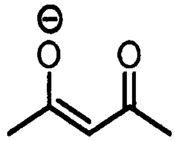

l'acétonate d'acétyle (acac)

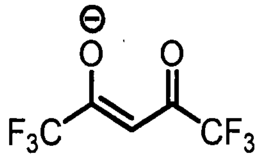

l'acétonate d'hexa-fluoroacétyle (hfac)

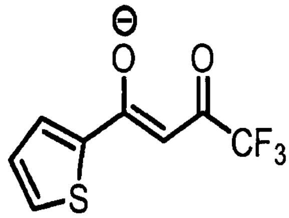

l'acétonate de thyényltrifluoro-méthylacétyle (ttfa)

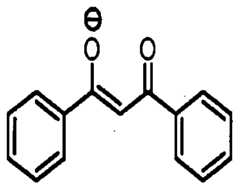

le dibenzoylméthane (DBM),

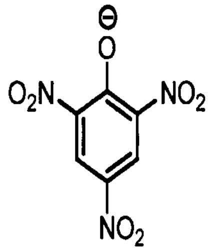

le picrate,

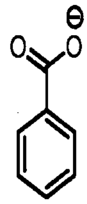

le benzoate,

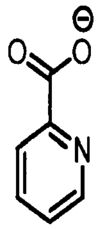

le picolinate,

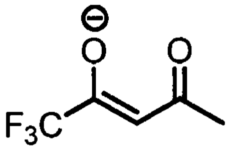

l'acétonate de trifluoroacétyle

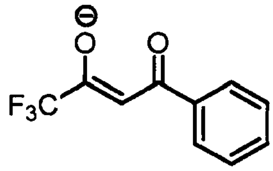

l'acétonate de benzyl-trifluorométhylacétyle

et/ou

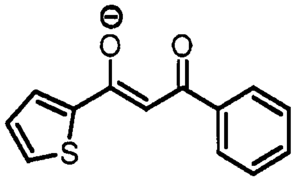

.

**19.** Utilisation d'un dispositif comportant une première source de rayonnement (4) dirigée sur un support pour accueillir

un composé à action photocatalytique (2) mis en contact avec un composé dégradable par photocatalyse (1), une deuxième source de rayonnement (6) dirigée sur le support et un détecteur (5) dirigé sur le support, dans le cadre d'un procédé selon l'une quelconque des revendications 1 à 15.

**20.** Utilisation d'un dispositif selon la revendication 19, **caractérisé en ce que** la deuxième source de rayonnement (6) est pulsée.

Fig. 5

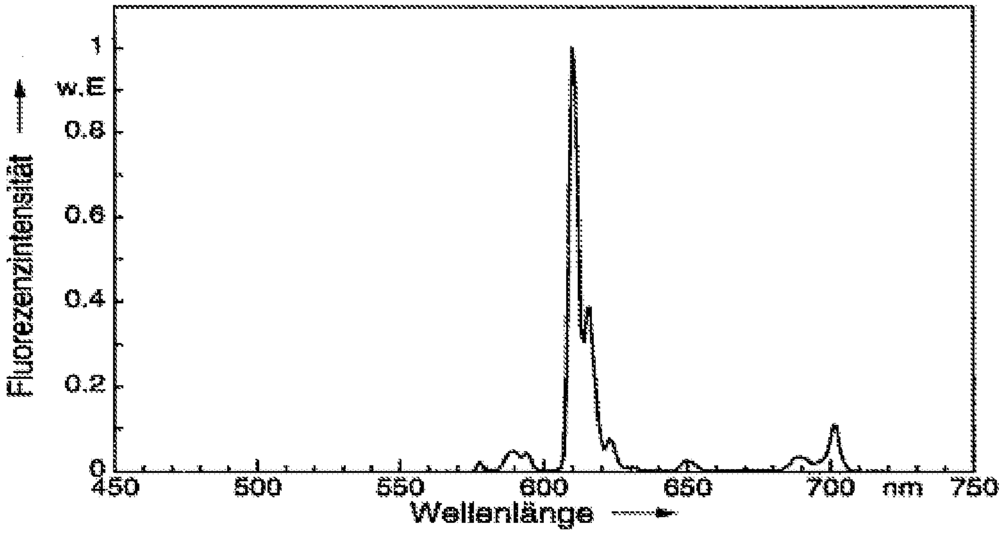
1
w.E
0.8
0.6
0.4
0.2
0
Fluorezenzintensität
450
500
550
600
650
700
nm
750
Wellenlänge

Fig. 6

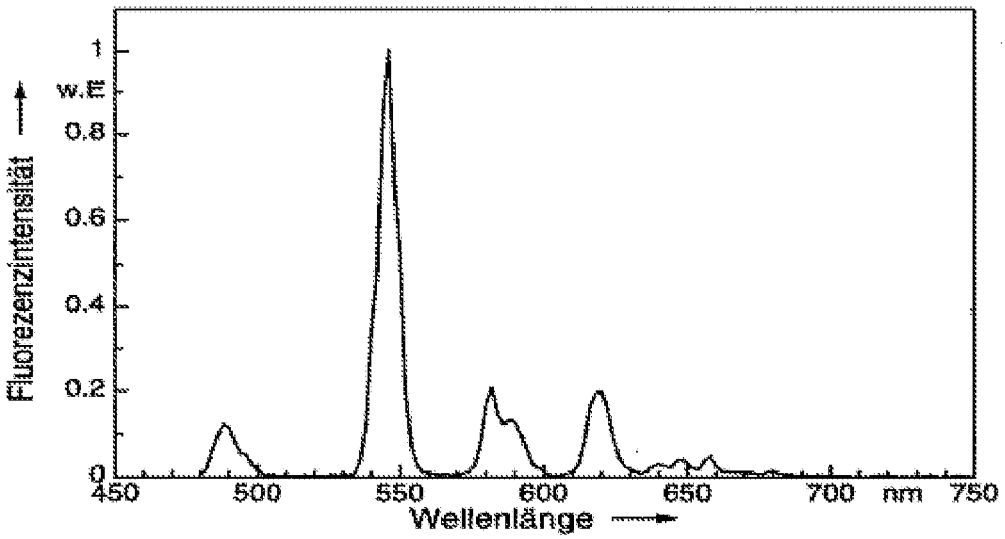
1
w.E
0.8
0.6
0.4
0.2
0
Fluorezenzintensität
450
500
550
600
650
700
nm
750
Wellenlänge

Fig. 7

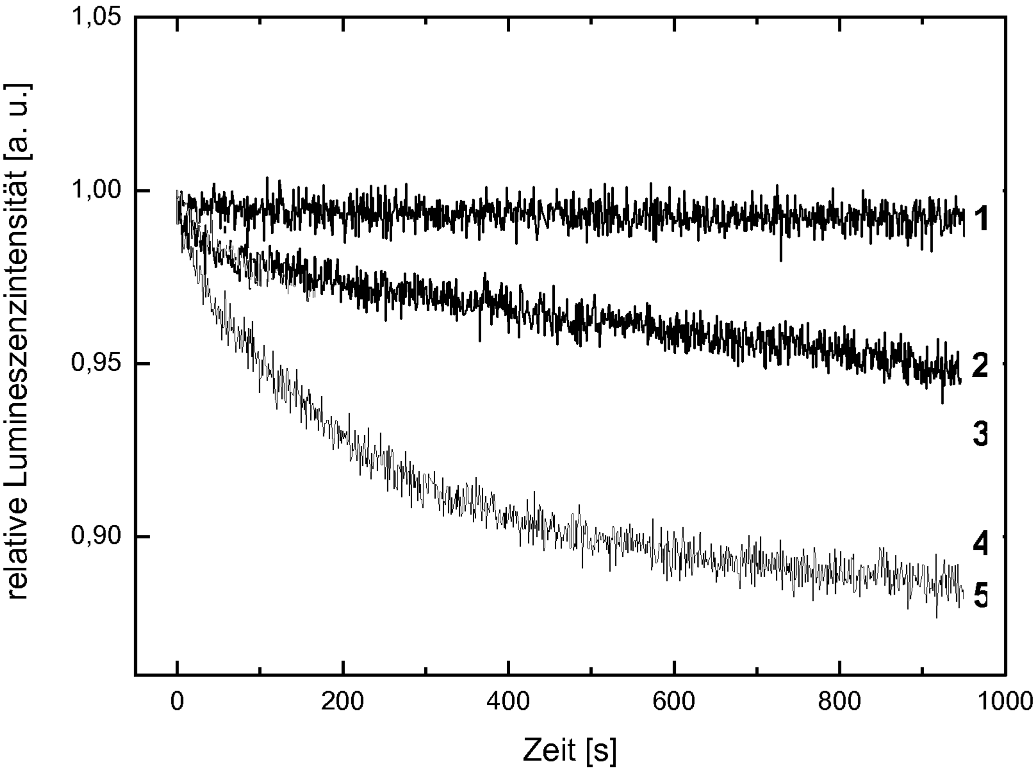
1,05
1,00
0,95
0,90
relative Lumineszenzintensität [a. u.]
0
200
400
600
800
1000
Zeit [s]
1
2
3
4
5

Fig. 3

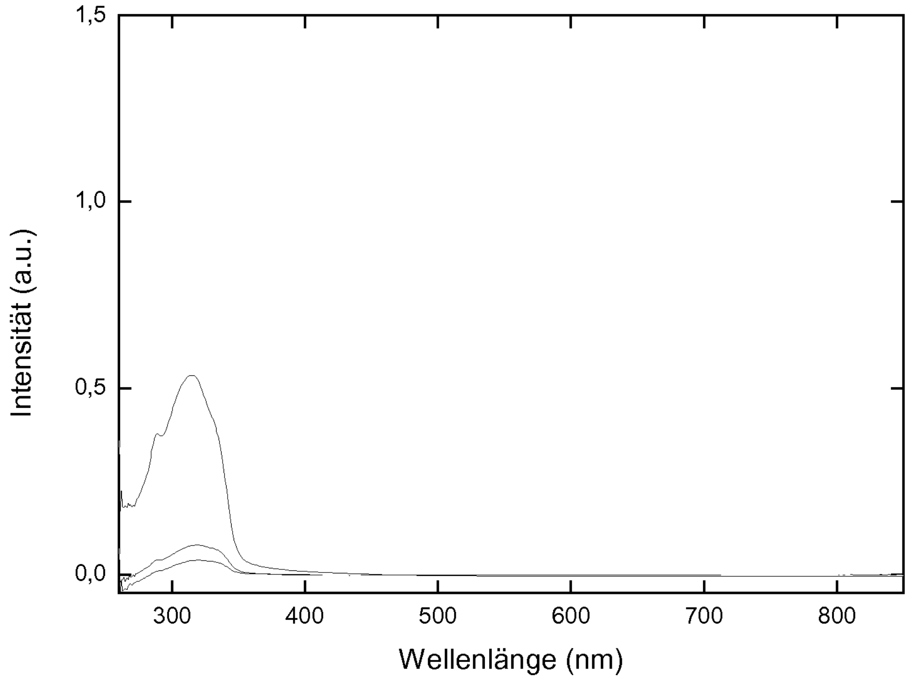
1,5
1,0
0,5
0,0
Intensität (a.u.)
300
400
500
600
700
800
Wellenlänge (nm)

Fig. 4

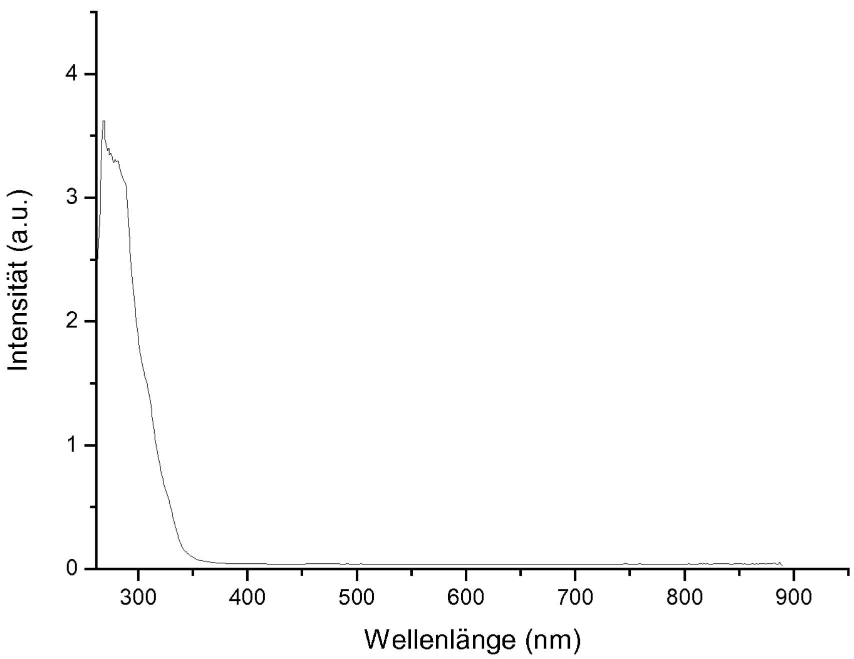
4
3
2
1
0
Intensität (a.u.)
300
400
500
600
700
800
900
Wellenlänge (nm)

Fig. 1

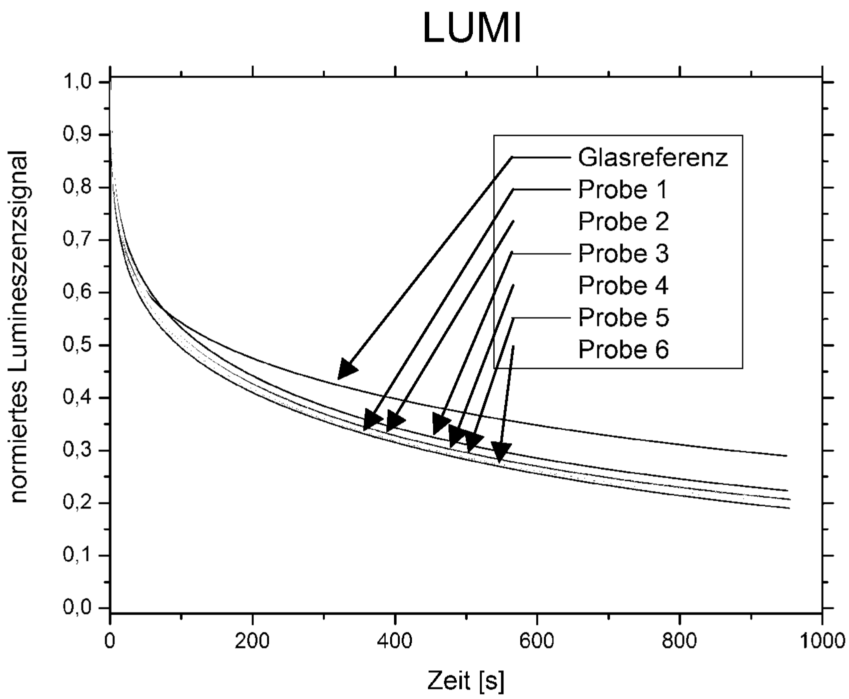
LUMI
normiertes Lumineszenzsignal
1,0
0,9
0,8
0,7
0,6
0,5
0,4
0,3
0,2
0,1
0,0
0
200
400
600
800
1000
Zeit [s]
Glasreferenz
Probe 1
Probe 2
Probe 3
Probe 4
Probe 5
Probe 6

Fig. 2

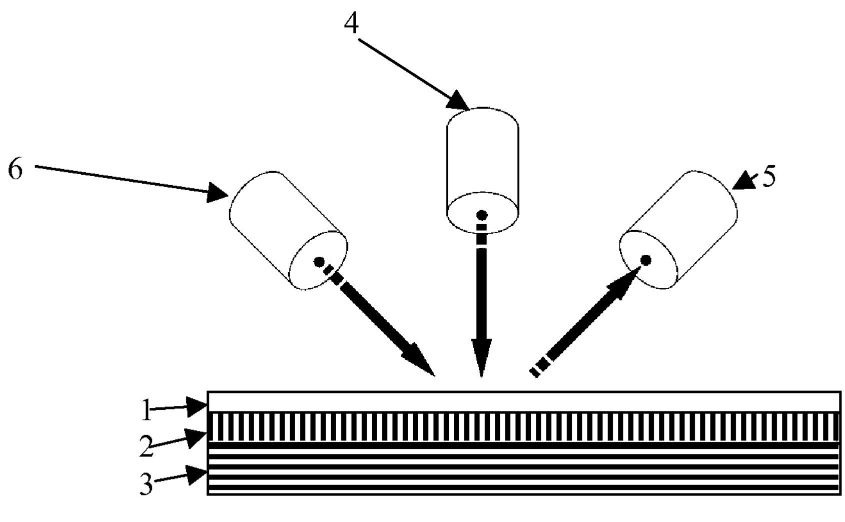
4
6
5
1
2
3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004027118
- DE 102006049009
- DE 102005003878
- WO 2004080595 A
- JP 2007298328 A
- WO 2005119220 A1


### In der Beschreibung aufgeführte Nicht-Patentliteratur


- **GUAN et al.** *Analytica Chimica Acta,* 2008, vol. 608, 73-78
- **DE SILVA et al.** *Thin Solid Films,* 2008, 957-962
- **KANG et al.** *Bull. Korean Chem. Soc.,* 1997, 75-80
- **DA SILVA.** *Polyhedron,* 2006, vol. 25, 3449
- *Polyhedron,* 2007, vol. 26, 1229
- *Inorg. Chim. Acta,* 2007, vol. 360, 3543